Europäisches Patentamt

European Patent Office

Office européen des brevets

(19)

(11) EP 1 655 856 A1

(12) EUROPEAN PATENT APPLICATION
published in accordance with Art. 158(3) EPC

(43) Date of publication:
10.05.2006 Bulletin 2006/19

(51) Int Cl.:
*H04B 3/23* (1980.01)    *H04M 1/58* (1968.09)

(21) Application number: 04747166.9

(22) Date of filing: 01.07.2004

(86) International application number:
PCT/JP2004/009697

(87) International publication number:
WO 2005/008910 (27.01.2005 Gazette 2005/04)

(84) Designated Contracting States:
DE FI FR GB

(30) Priority: 17.07.2003 JP 2003276181
10.06.2004 JP 2004172528

(71) Applicant: MATSUSHITA ELECTRIC INDUSTRIAL
CO., LTD.
Kadoma-shi, Osaka 571-8501 (JP)

(72) Inventors:
• MIZUSHIMA, Koichiro
Kanagawa 226-0027 (JP)

• MATSUI, Minoru
Kanagawa 224-0001 (JP)

(74) Representative: Pautex Schneider, Nicole
Véronique et al
Novagraaf International S.A.
25 avenue du Pailly
1220 Les Avanchets,
Geneva (CH)

(54) **SPEECH COMMUNICATION APPARATUS**

(57)    [PROBLEM]
It is an object of the present invention to provide a voice communication apparatus which can prevent its echo suppressing characteristic from being deteriorated in response to the varied relative location of the microphone unit with respect to the speaker unit, and maintain the quality of the near-end signal to be transmitted to the far-end speaker.

[MEANS FOR SOLVING]
Herein disclosed is a voice communication apparatus to be provided with a current value detecting unit **131** for detecting a current parameter value related to the relative location of either the first near-end voice converting unit **121** or the second near-end voice converting unit **122** with respect to the far-end signal converting unit **112,** each of the first and second near-end signal delay sections **133** and **134** being operative to delay the near-end signal on the basis of the current parameter value detected by the current value detecting unit **131,** and the first outputting section **135** being operative to output a signal indicative of the signal difference between the near-end signals respectively delayed by the first and second near-end signal delay sections **133** and **134.**

FIG. 1

EP 1 655 856 A1

**Description**

**TECHNICAL FIELD OF THE INVENTION**

The present invention relates to a voice communication apparatus, and more particularly to a voice communication apparatus for reliably suppressing an echo component of a near-end signal to be transmitted to a far-end speaker without being affected by a relative location of a microphone unit with respect to a speaker unit.

**DESCRIPTION OF THE RELATED ART**

As one of conventional voice communication apparatuses, there is well known a voice communication apparatus which comprises a microphone unit for producing a near-end signal to be transmitted to a far-end speaker, and an adaptive filter for estimating an acoustic transfer characteristic between the microphone unit and a speaker unit. The conventional voice communication apparatus thus constructed is operative to suppress an echo component of the near-end signal on the basis of the estimated acoustic transfer characteristic.

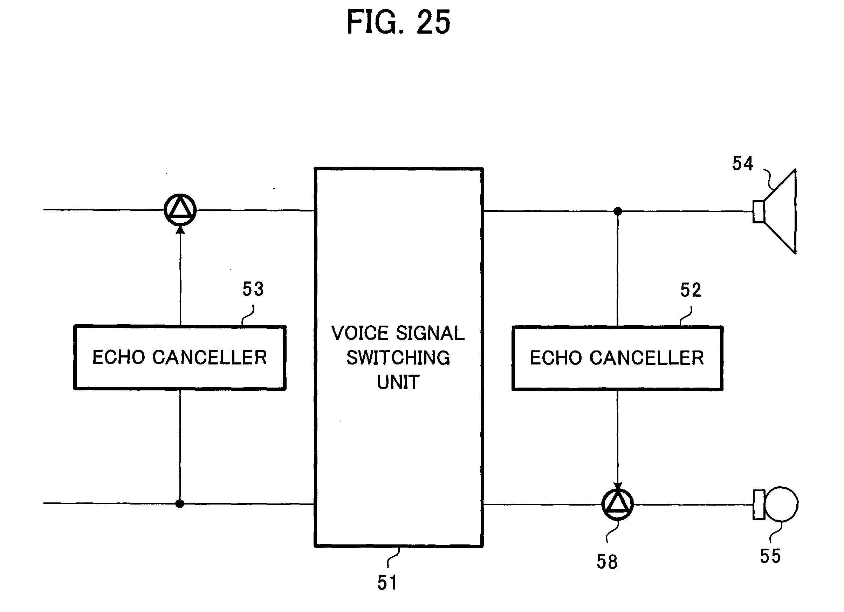

The conventional voice communication apparatus is disclosed in, for example, Japanese Patent Laying-Open Publication No. 2000-244670, and shown in FIG **25** as comprising first and second echo cancellers **52** and **53,** and a voice signal switching unit **51** intervening between the first and second echo cancellers **52** and **53** to establish voice communication.

The first echo canceller **52** is operative to estimate a replica echo on the basis of a transfer function of a propagation path between the a speaker unit **54** and a microphone unit **55** to produce a replica echo signal indicative of the replica echo, while a subtracting unit **58** is operative to suppress the echo component of the near-end signal by subtracting the replica echo signal from the near-end signal outputted by the microphone unit **55.**

When the conversion between two-lines and four-lines is performed in the conventional voice communication apparatus, the signal indicative of the near-end sound received by the microphone unit is received by the speaker unit. The second echo canceller 53 is operative to suppress an echo resulting from the fact that the signal indicative of the near-end sound is received by the speaker unit.

Here, the conventional voice communication apparatus of four-lines type may establish voice communication without the second echo canceller **53** and the voice signal switching unit **51.**

Additionally, the coefficient of the transfer function of each of the first and second echo cancellers **52** and **53** is sequentially updated in response to the varied propagation path.

As another example, there is well known a conventional voice communication apparatus which comprises first and second microphone units each spaced apart from a speaker unit. The distance between the speaker unit and the first microphone unit is different from the distance between the speaker unit and the second microphone unit. The echo component of the signal outputted by one of the first and second microphone units is effectively suppressed on the basis of the signal outputted by the other of the first and second microphone units.

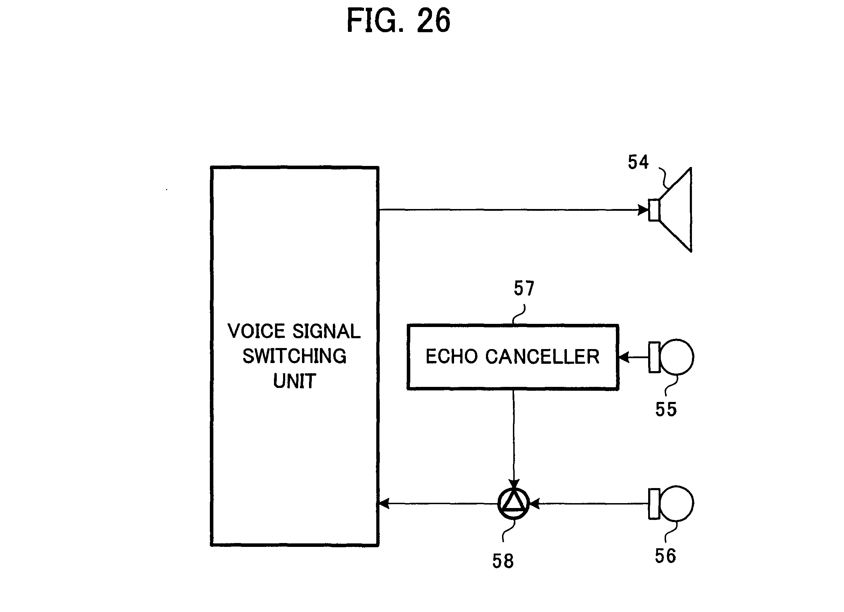

In the conventional voice communication apparatus disclosed in, for example, Japanese Patent Laying-Open Publication No. H08-223275, and shown in FIG **26,** each of the first and second microphone units **55** and **56** is operative to detect a sound outputted by the microphone.

In a learning step, the above mentioned voice communication apparatus is operative to update the echo suppressing characteristic of the echo canceller **57** electrically connected as a latter element to the first microphone unit **55** to minimize a power value of the signal difference between a signal outputted by the first microphone unit **55** and a signal outputted by the second microphone unit **56** on the basis of the transfer function of the propagation path between the speaker unit **54** and each of the first and second microphone units **55** and **56.**

When the the above mentioned voice communication apparatus is utilized by its user, the above mentioned voice communication apparatus can suppress the echo component of the near-end signal even if the sound outputted by the speaker unit **54** is received by each of the first and second microphone units **55** and **56.**

Each of the Japanese Patent Laying-Open Publications Nos. 2000-244670 and H08-223275 discloses an echo canceller having an echo suppressing characteristic to be determined on the basis of the propagation path between the speaker unit and the microphone unit.

If the conventional echo canceller disclosed in each of the Japanese Patent Laying-Open Publications Nos. 2000-244670 and H08-223275 is installed in a voice communication apparatus such as for example a mobile phone which comprises two housings connected to each other through a hinge, one of the housings accommodating a speaker unit, the other of the housings accommodating a microphone unit, the conventional echo canceller is required to update the echo suppressing characteristic in respose to the varied relative location of the microphone unit with respect to the speaker unit.

Each of the Japanese Patent Laying-Open Publications Nos. 2000-244670 and H08-223275, however, fails to disclose an echo canceller having an echo suppressing characteristic to be updated in response to the varied relative location of the microphone unit with respect to the speaker unit. If the conventional echo canceller disclosed in each of the Japanese Patent Laying-Open Publications Nos. 2000-244670 and H08-223275 is installed in a voice communication apparatus, the the conventional echo canceller cannot update the echo suppressing characteristic in response to the varied relative location of the microphone unit to the speaker unit. This leads to the fact that the quality of the near-end signal to be transmitted to the far-end speaker is deteriorated in response to the varied relative location of the microphone unit to the speaker unit.

It is, therefore, an object of the present invention to overcome the foregoing drawback, and to provide a voice communication apparatus which can maintain its echo suppressing characteristic to allow the near-end signal to be transmitted to the far-end speaker at a relatively high quality without being affected by the varied relative location of the microphone unit to the speaker unit.

## DISCLOSURE OF THE INVENTION

In accordance with one aspect of the present invention, there is provided a voice communication apparatus, comprising: a housing having a reference point; voice outputting means for outputting a far-end voice indicative of a far-end signal; voice inputting means for inputting a near-end voice; and echo suppressing means for suppressing an echo generated by the voice inputting means from the far-end voice outputted by the voice outputting means, wherein the voice outputting means includes a far-end signal converting unit spaced apart from the reference point with a predetermined first distance, and adapted to convert the far-end signal to the far-end voice, the voice inputting means includes a first near-end voice converting unit spaced apart from the reference point with a predetermined second distance, and adapted to convert the inputted near-end voice to a first near-end signal, and a second near-end voice converting unit disposed at a predetermined position in spaced relationship with the first near-end voice converting unit, and adapted to convert the inputted near-end voice to a second near-end signal, the echo suppressing means includes a current value detecting unit for detecting a current parameter value indicative of a current relative location of either the first near-end voice converting unit or the second near-end voice converting unit with respect to the far-end signal converting unit, a first propagation time calculating unit for calculating a first propagation time of the far-end voice converted by the far-end signal converting unit to a distance between the far-end signal converting unit and the first near-end voice converting unit on the basis of a first function to be provided with the parameter value defined as its independent variable and the first propagation time defined as its dependent variable, and a second propagation time of the far-end voice converted by the far-end signal converting unit to a distance between the far-end signal converting unit and the second near-end voice converting unit on the basis of a second function to be provided with the parameter value defined as its independent variable and the second propagation time defined as its dependent variable, and a first suppressed near-end signal outputting unit for outputting a first suppressed near-end signal after suppressing the echo on the basis of its echo suppressing characteristic updated in response to the first and second propagation time calculated by the first propagation time calculating unit.

The voice communication apparatus thus constructed as previously mentioned can reliably suppress the echo component of the near-end signal to be transmitted to the far-end speaker without being affected by the varied relative location of the microphone unit with respect to the speaker unit.

In the voice communication apparatus according to the present invention, the first suppressed near-end signal outputting unit may include a first near-end signal delay section for delaying the first near-end signal converted by the first near-end voice converting unit on the basis of the first propagation time calculated by the first propagation time calculating unit, a second near-end signal delay section for delaying the second near-end signal converted by the second near-end voice converting unit on the basis of the second propagation time calculated by the first propagation time calculating unit, and a first outputting section for outputting a signal indicative of the signal difference between the first near-end signal delayed by the first near-end signal delay section and the second near-end signal delayed by the second near-end signal delay section.

The voice communication apparatus thus constructed as previously mentioned can reliably suppress the echo component of the near-end signal to be transmitted to the far-end speaker by delaying the near-end signal on the basis of the propagation time of the far-end voice converted by the far-end signal converting unit to a distance between the far-end signal converting unit and either the first near-end voice converting unit or the second near-end voice converting unit.

In the voice communication apparatus according to the present invention, the echo suppressing means may include a first equalizing unit for equalizing a frequency spectrum of the first suppressed near-end signal outputted by the first suppressed near-end signal outputting unit with respect to the current parameter value detected by the current value detecting unit.

The voice communication apparatus thus constructed as previously mentioned can maintain the quality of the near-end signal to be transmitted to a far-end speaker even if the frequency spectrum of the suppressed near-end signal is deteriorated in response to the varied relative location of the near-end voice converting unit with respect to the far-end signal converting unit.

In the voice communication apparatus according to the present invention, the echo suppressing means may include a first near-end speaker's position detecting unit for detecting, as a first near-end speaker's position, a position of the near-end speaker with respect to either the first near-end voice converting unit or the second near-end voice converting unit on the basis of the cross-correlation function between the first near-end signal converted by the first near-end voice converting unit and the second near-end signal converted by the second near-end voice converting unit, and a second equalizing unit for equalizing a frequency spectrum of the first suppressed near-end signal outputted by the first suppressed near-end signal outputting unit with respect to the current parameter value detected by the current value detecting unit and the position of the near-end speaker detected by the first near-end speaker's position detecting unit.

The voice communication apparatus thus constructed as previously mentioned can maintain the quality of the near-end signal to be transmitted to a far-end speaker even if the relative location of the near-end speaker with respect to either the first near-end voice converting unit or the second near-end voice converting unit deviates from a predetermined reference position.

In the voice communication apparatus according to the present invention, the echo suppressing means may include a second near-end speaker's position detecting unit for detecting, as a second near-end speaker's position, a current position of the near-end speaker with respect to the far-end signal converting unit on the basis of the current parameter value detected by the current value detecting unit, and a third equalizing unit for equalizing a frequency spectrum of the first suppressed near-end signal outputted by the first suppressed near-end signal outputting unit with respect to the current parameter value detected by the current value detecting unit and the second near-end speaker's position detected by the second near-end speaker's position detecting unit.

The voice communication apparatus thus constructed as previously mentioned can maintain the quality of the near-end signal to be transmitted to a far-end speaker even if the relative location of the near-end speaker with respect to the far-end signal converting unit deviates from a predetermined reference position. The second near-end speaker's position detecting unit can be simple in construction in comparison with the first near-end speaker's position detecting unit.

In accordance with another aspect of the present invention, there is provided a voice communication apparatus, comprising: a housing having a reference point; voice outputting means for outputting a far-end voice indicative of a far-end signal; voice inputting means for inputting a near-end voice; and echo suppressing means for suppressing an echo generated by the voice inputting means from the far-end voice outputted by the voice outputting means, wherein the voice outputting means includes a far-end signal converting unit spaced apart from the reference point with a predetermined first distance, and adapted to convert the far-end signal to the far-end voice, the voice inputting means includes a first near-end voice converting unit spaced apart from the reference point with a predetermined second distance, and adapted to convert the inputted near-end voice to a first near-end signal, and a second near-end voice converting unit disposed at a predetermined position in spaced relationship with the first near-end voice converting unit, and adapted to convert the inputted near-end voice to a second near-end signal, the echo suppressing means includes a current value detecting unit for detecting a current parameter value indicative of a current relative location of either the first near-end voice converting unit or the second near-end voice converting unit with respect to the far-end signal converting unit, a second propagation time calculating unit for calculating a third propagation time of the near-end voice to be received by the first near-end voice converting unit with respect to the current parameter value detected by the current value detecting unit on the basis of a third function to be provided with the parameter value defined as its independent variable and the third propagation time defined as its dependent variable, and a fourth propagation time of the near-end voice to be received by the second near-end voice converting unit with respect to the current parameter value detected by the current value detecting unit on the basis of a fourth function to be provided with the parameter value defined as its independent variable and the fourth propagation time defined as its dependent variable, a remaining voice signal extracting unit for extracting a remaining voice signal on the basis of its remaining voice signal extracting characteristic updated in response to the third and fourth propagation time calculated by the second propagation time calculating unit, and a second suppressed near-end signal outputting unit for outputting a second suppressed near-end signal by subtracting the remaining voice signal extracted by the remaining voice signal extracting unit from either the first near-end signal converted by the first near-end voice converting unit or the second near-end signal converted by the second near-end voice converting unit.

The voice communication apparatus thus constructed as previously mentioned can reliably suppress the echo component and the background noise of the near-end signal to be transmitted to the far-end speaker without being affected by the varied relative location of the microphone unit with respect to the speaker unit.

In the voice communication apparatus according to the present invention, the remaining voice signal extracting unit may include a third near-end signal delay section for delaying the first near-end signal converted by the first near-end voice converting unit on the basis of the third propagation time calculated by the second propagation time calculating unit, a fourth near-end signal delay section for delaying the second near-end signal converted by the second near-end voice converting unit on the basis of the fourth propagation time calculated by the second propagation time calculating unit, and a remaining voice signal outputting section for outputting, as a remaining voice signal, a signal indicative of the signal difference between the first near-end signal delayed by the first near-end signal delay section and the second near-end signal delayed by the second near-end signal delay section. The second suppressed near-end signal outputting unit may include a disturbing sound signal estimating section for estimating a disturbing sound signal in either the first near-end signal converted by the first near-end voice converting unit or the second near-end signal converted by the second near-end voice converting unit on the basis of the remaining voice signal outputted by the remaining voice signal outputting section, a fifth near-end signal delay section for delaying either the first near-end signal converted by the first near-end voice converting unit or the second near-end signal converted by the second near-end voice converting unit with a delay time required to performing the estimation of the interfering near-end signal by the disturbing sound signal estimating section, a second outputting section for outputting a second suppressed near-end signal by subtracting the disturbing sound signal estimated by the disturbing sound signal estimating section from the near-end signal delayed, as a fifth delayed near-end signal, by the fifth near-end signal delay section, and an updating section for sequentially updating the disturbing sound signal estimating characteristic of the disturbing sound signal estimating section by performing the least squares estimation of the second suppressed near-end signal.

The voice communication apparatus thus constructed as previously mentioned can reliably suppress the echo component and the background noise of the near-end signal to be transmitted to the far-end speaker without being affected by the varied relative location of the near-end voice converting unit with respect to the far-end signal converting unit by reason that the remaining voice signal is extracted by the remaining voice signal extracting unit, and the disturbing sound signal is subtracted from the near-end signal.

In the voice communication apparatus according to the present invention, the echo suppressing means may further include an initial characteristic setting unit for setting an initial disturbing sound signal estimating characteristic of the updating section on the basis of the current parameter value detected by the current value detecting unit.

The voice communication apparatus thus constructed as previously mentioned can more reliably suppress the echo component and the background noise of the near-end signal to be transmitted to the far-end speaker by minimizing the second suppressed near-end signal on the basis of the least squares estimation to converge the disturbing sound signal estimating characteristic of the disturbing sound signal estimating section to the optimum disturbing sound signal estimating characteristic.

In the voice communication apparatus according to the present invention, the echo suppressing means may include a first near-end speaker's position detecting unit for detecting, as a first near-end speaker's position, a position of the near-end speaker with respect to either the first near-end voice converting unit or the second near-end voice converting unit on the basis of the cross-correlation function between the first near-end signal converted by the first near-end voice converting unit and the second near-end signal converted by the second near-end voice converting unit, and a second equalizing unit for equalizing a frequency spectrum of the first suppressed near-end signal outputted by the first suppressed near-end signal outputting unit with respect to the current parameter value detected by the current value detecting unit and the position of the near-end speaker detected by the first near-end speaker's position detecting unit.

The voice communication apparatus thus constructed as previously mentioned can maintain the quality of the near-end signal to be transmitted to a far-end speaker even if the relative location of the near-end speaker with respect to the far-end signal converting unit deviates from a predetermined reference position.

In the voice communication apparatus according to the present invention, the echo suppressing means may include a second near-end speaker's position detecting unit for detecting, as a second near-end speaker's position, a position of the near-end speaker with respect to the far-end signal converting unit on the basis of the current parameter value detected by the current value detecting unit, and a third equalizing unit for equalizing a frequency spectrum of the second suppressed near-end signal outputted by the second suppressed near-end signal outputting unit with respect to the current parameter value detected by the current value detecting unit and the second near-end speaker's position detected by the second near-end speaker's position detecting unit.

The voice communication apparatus thus constructed as previously mentioned can maintain the quality of the near-end signal to be transmitted to a far-end speaker by reason that the frequency spectrum of the near-end signal is equalized by the third equalizing unit even if the relative location of the near-end speaker with respect to the far-end signal converting unit deviates from a predetermined reference position. The second near-end speaker's position detecting unit can be simple in construction in comparison with the first near-end speaker's position detecting unit.

In accordance with further aspect of the present invention, there is provided a voice communication apparatus, comprising: a housing having a reference point; voice outputting means for outputting a far-end voice indicative of a far-end signal; voice inputting means for inputting a near-end voice; and echo suppressing means for suppressing an echo generated by the voice inputting means from the far-end voice outputted by the voice outputting means, wherein the voice outputting means includes a far-end signal converting unit spaced apart from the reference point with a predetermined first distance, and adapted to convert the far-end signal to the far-end voice, the voice inputting means includes a first near-end voice converting unit spaced apart from the reference point with a predetermined second distance, and adapted to convert the inputted near-end voice to a first near-end signal, and a second near-end voice converting unit disposed at a predetermined position in spaced relationship with the first near-end voice converting unit, and adapted to convert the inputted near-end voice to a second near-end signal, the echo suppressing means includes an echo component detecting unit for detecting, as an echo component signal, a component other than a real near-end voice to be specified as a cross-component in each of the first and second near-end signals on the basis of the first and second near-end signals respectively converted by the first and second near-end voice converting units, and a third suppressed near-end signal outputting unit for outputting a third suppressed near-end signal by subtracting the echo component signal detected by the echo component detecting unit from either the first near-end signal converted by the first near-end voice converting unit or the second near-end signal converted by the second near-end voice converting unit.

Here, the term "echo component signal" is intended to indicate a disturbing component of the near-end signal other than the near-end voice component of the near-end signal. The disturbing component of the near-end voice includes not only an echo but also a background noise.

The voice communication apparatus thus constructed as previously mentioned can maintain the quality of the near-end signal to be transmitted to a far-end speaker by reliably suppressing the echo component and the background noise of the near-end signal to be transmitted to the far-end speaker without being affected by the varied relative location of the near-end voice converting unit with respect to the far-end signal converting unit by reason that the echo component signal is subtracted from the near-end signal by the third suppressed near-end signal outputting unit.

In the voice communication apparatus according to the present invention, the echo component detecting unit may include a real near-end voice estimating section for estimating, as a real near-end signal, a real near-end voice to be specified as a cross-component in each of the first and second near-end signals respectively converted by the first and second near-end voice converting units, a sixth near-end signal delay section for delaying either the first near-end signal converted by the first near-end voice converting unit or the second near-end signal converted by the second near-end voice converting unit with a delay time required to performing the estimation of the real near-end signal by the real near-end voice estimating section, and an echo component signal outputting section for outputting, as a first echo component signal, a signal indicative of the signal difference between the near-end signal delayed as a sixth delayed near-end signal by the sixth near-end signal delay section and the real near-end signal estimated by the real near-end voice estimating section. The third suppressed near-end signal outputting unit may include an echo component estimating section for estimating, as a second echo component signal, a signal to be specified as a component other than the real near-end voice in either the first near-end signal converted by the first near-end voice converting unit or the second near-end signal converted by the second near-end voice converting unit on the basis of the echo component signal outputted by the echo component signal outputting section, a seventh near-end signal delay section for delaying either the first near-end signal converted by the first near-end voice converting unit or the second near-end signal converted by the second near-end voice converting unit with a delay time required to performing the estimation of the echo component signal by the echo component estimating section, and a third outputting section for outputting a third suppressed near-end signal by subtracting the second echo component signal estimated by the echo component estimating section from the near-end signal delayed as a seventh delayed near-end signal by the seventh near-end signal delay section.

The voice communication apparatus thus constructed as previously mentioned can maintain the quality of the near-end signal to be transmitted to a far-end speaker by reliably suppressing the echo component and the background noise of the near-end signal to be transmitted to the far-end speaker without being affected by the varied relative location of the near-end voice converting unit with respect to the far-end signal converting unit by reason that the echo component signal is estimated by the echo component estimating section, and the echo component signal is subtracted from the near-end signal.

In the voice communication apparatus according to the present invention, the real near-end voice estimating section may have a first adaptive filter for executing the adaptive signal processing to perform the least absolute deviation estimation of a signal outputted by the echo component signal outputting section to either the first near-end signal converted by the first near-end voice converting unit or the second near-end signal converted by the second near-end voice converting unit. The echo component estimating section may have a second adaptive filter for executing the adaptive signal processing to perform the least absolute deviation estimation of a signal outputted by the third outputting section to the echo component signal outputted by the echo component signal outputting section. The echo suppressing means may include a current value detecting unit for detecting a current parameter value indicative of a current relative location of either the first near-end voice converting unit or the second near-end voice converting unit with respect to the far-end signal converting unit, a first initial value determining unit for determining, as a parameter of the adaptive signal processing, initial filter coefficient of the first adaptive filter in response to the current parameter value detected by the current value detecting unit, and a second initial value determining unit for determining, as a parameter of the adaptive signal processing, initial filter coefficient of the second adaptive filter in response to the current parameter value detected by the current value detecting unit.

The voice communication apparatus thus constructed as previously mentioned can maintain the quality of the near-end signal to be transmitted to a far-end speaker by reliably and immediately suppressing the echo component and the background noise of the near-end signal to be transmitted to the far-end speaker without being affected by the varied relative location of the near-end voice converting unit with respect to the far-end signal converting unit by reason that the initial filter coefficient of the first adaptive filter is determined by the first initial value determining unit in response to the current parameter value detected by the current value detecting unit, and the initial filter coefficient of the second adaptive filter is determined by the second initial value determining unit in response to the current parameter value detected by the current value detecting unit.

In the voice communication apparatus according to the present invention, the echo suppressing means may include an adaptive controlling unit for issuing an instruction to the first adaptive filter to update the first filter coefficient when the judgment is made that the near-end signal predetermined as one of the first and second near-end signals exceeds in amplitude the far-end signal, and issuing an instruction to the second adaptive filter to update the second filter coefficient when the judgment is made that the far-end signal exceeds in amplitude one of the first and second near-end signals.

The voice communication apparatus thus constructed as previously mentioned can maintain the quality of the near-end signal to be transmitted to a far-end speaker by reliably and immediately suppressing the echo component and the background noise of the near-end signal to be transmitted to the far-end speaker without being affected by the varied relative location of the near-end voice converting unit with respect to the far-end signal converting unit by reason that the adaptive controlling unit is operative to issue each of the instruction to the first adaptive filter to update the first filter coefficient and the instruction to the second adaptive filter to update the second filter coefficient on the basis of the near-end signal and the far-end signal.

## BRIEF DESCRIPTION OF THE DRAWINGS

The features and advantages of a voice communication apparatus according to the present invention will be more clearly understood from the following description taken in conjunction with the accompanying drawings:

FIG 1 is a block diagram showing a functional constitution of the first embodiment of the voice communication apparatus according to the present invention;
FIG. 2 is a block diagram showing a hardware constitution of the first embodiment of the voice communication apparatus according to the present invention;
FIG. 3 is a schematic view showing a mobile phone exemplified as the voice communication apparatus according to the present invention;
FIG 4 is a flow chart showing an operation of the first embodiment of the voice communication apparatus according to the present invention;
FIG 5 is a block diagram showing a functional constitution of the first embodiment of the voice communication apparatus in which the echo suppressing means further includes a first equalizing unit;
FIG. 6 is a flowchart showing an operation of the first embodiment of the voice communication apparatus in which the echo suppressing means further includes a first equalizing unit;
FIG. 7 is a flowchart showing an operation of the first equalizing unit of the voice communication apparatus according to the first embodiment of the present invention;
FIG 8 is a graph showing an equalization characteristic of the first equalizing unit of the voice communication apparatus according to the first embodiment of the present invention;
FIG 9 is a block diagram showing a functional constitution of the first embodiment of the voice communication apparatus in which the echo suppressing means further includes a second equalizing unit;
FIG 10 is a flowchart showing an operation of the first embodiment of the voice communication apparatus in which the echo suppressing means further includes a second equalizing unit;
FIG 11 is a flowchart showing an operation of the second equalizing unit of the voice communication apparatus according to the first embodiment of the present invention;
FIG 12 is a block diagram showing a functional constitution of the first embodiment of the voice communication apparatus in which the echo suppressing means further includes a third equalizing unit;
FIG 13 is a graph showing an equalization characteristic of the second equalizing unit of the voice communication apparatus according to the first embodiment of the present invention;
FIG. 14 is a block diagram showing a functional constitution of the second embodiment of the voice communication apparatus according to the present invention;
FIG 15 is a flow chart showing an operation of the second embodiment of the voice communication apparatus according to the present invention;
FIG 16 is a flowchart showing an operation of the echo suppressing means of the voice communication apparatus according to the second embodiment of the present invention;
FIG. 17 is a block diagram showing a functional constitution of the second embodiment of the voice communication apparatus in which the echo suppressing means further includes an initial characteristic setting unit;

FIG **18** is a flowchart showing an operation of the second embodiment of the voice communication apparatus in which the echo suppressing means further includes an initial characteristic setting unit;

FIG. **19** is a block diagram showing a functional constitution of the second embodiment of the voice communication apparatus in which the echo suppressing means further includes a second equalizing unit;

FIG **20** is a flowchart showing an operation of the second embodiment of the voice communication apparatus in which the echo suppressing means further includes a second equalizing unit;

FIG. **21** is a block diagram showing a functional constitution of the second embodiment of the voice communication apparatus in which the echo suppressing means further includes a third equalizing unit;

FIG. **22** is a block diagram showing a functional constitution of the third embodiment of the voice communication apparatus according to the present invention;

FIG **23** is a flow chart showing an operation of the third embodiment of the voice communication apparatus according to the present invention;

FIG **24** is a graphs showing, as an example of the near-end signal to be transmitted to the far-end speaker, the signal outputted with no echo suppression, the signal outputted by conventional apparatus and the signal outputted by the voice communication apparatus according to the present invention;

FIG **25** is a block diagram showing a conventional voice communication apparatus; and

**FIG. 26** is a block diagram showing a conventional voice communication apparatus.

## DESCRIPTION OF THE PREFERRED EMBODIMENTS

The embodiments of the voice communication apparatus will be described hereinafter in accordance with accompanying drawings.

(first embodiment)

In this specification, the term "reference point" is intended to indicate a point required to define a current relative location of either a first near-end voice converting unit or a second near-end voice converting unit with respect to a far-end signal converting unit. In a mobile phone to be exemplified as the voice communication apparatus according to the present invention, the mobile phone comprises a housing including complementary sections, and a hinge having a reference point. The hinge intervenes the complementary sections to allow the complementary sections to be angularly moved with respect to each other.

In this specification, the term "reference position" is intended to indicate a position of a near-end speaker with respect to the far-end signal converting unit or either a first near-end voice converting unit or a second near-end voice converting unit. The reference position is determined in design stage. The location of the near-end speaker with respect to either the first near-end voice converting unit or the second near-end voice converting unit is defined as a first reference position. The location of the near-end speaker with respect to the far-end signal converting unit is defined as a second reference position.

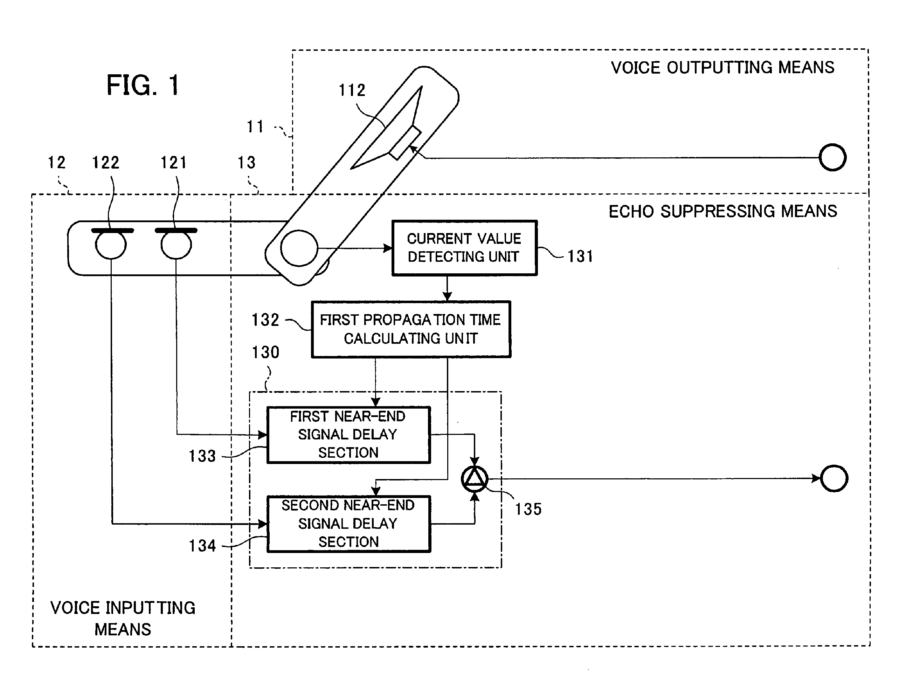

The constitution of the first embodiment of the voice communication apparatus according to the present invention will be firstly described hereinafter with reference to FIG **1.**

As shown in FIG **1,** the voice communication apparatus comprises voice outputting means **11** for outputting a far-end voice indicative of a far-end signal, voice inputting means **12** for inputting a near-end voice, and echo suppressing means **13** for suppressing an echo generated by the voice inputting means **12** from the far-end voice outputted by the voice outputting means **11.**

The voice outputting means **11** includes a far-end signal converting unit **112** spaced apart from the reference point with a predetermined first distance, and adapted to convert the far-end signal to the far-end voice.

The voice inputting means **12** includes a first near-end voice converting unit **121** spaced apart from the reference point with a predetermined second distance, and adapted to convert the inputted near-end voice to a first near-end signal, and a second near-end voice converting unit **122** disposed at a predetermined position in spaced relationship with the first near-end voice converting unit **121,** and adapted to convert the inputted near-end voice to a second near-end signal.

The echo suppressing means **13** includes a current value detecting unit **131** for detecting a current parameter value related to a current relative location of either the first near-end voice converting unit **121** or the second near-end voice converting unit **122** with respect to the far-end signal converting unit **112,** a first propagation time calculating unit **132** for calculating a propagation time (hereinafter referred to as "first propagation time") of the far-end voice converted by the far-end signal converting unit **112** to a distance between the far-end signal converting unit **112** and the first near-end voice converting unit **121** on the basis of a first function to be provided with the parameter value defined as its independent variable and the first propagation time defined as its dependent variable, and a propagation time (hereinafter referred to as "second propagation time") of the far-end voice converted by the far-end signal converting unit **112** to a distance between the far-end signal converting unit **112** and the second near-end voice converting unit **122** on the basis of a second function to be provided with the parameter value defined as its independent variable and the second propagation time defined as its dependent variable, and a first suppressed near-end signal outputting unit **130** for outputting a first suppressed near-end signal after suppressing the echo on the basis of its echo suppressing characteristic updated in response to the first and second propagation time calculated by the first propagation time calculating unit **132**.

The first suppressed near-end signal outputting unit **130** includes a first near-end signal delay section **133** for delaying the first near-end signal converted by the first near-end voice converting unit **121** on the basis of the first propagation time calculated by the first propagation time calculating unit **132,** a second near-end signal delay section **134** for delaying the second near-end signal converted by the second near-end voice converting unit **122** on the basis of the second propagation time calculated by the first propagation time calculating unit **132,** and a first outputting section **135** for outputting a signal indicative of the signal difference between the first near-end signal delayed by the first near-end signal delay section **133** and the second near-end signal delayed by the second near-end signal delay section **134.**

As shown in FIG **1,** the first suppressed near-end signal outputting unit **130** includes a first near-end signal delay section **133** and a second near-end signal delay section **134** in the voice communication apparatus according to the first embodiment of the present invention. However, the first near-end signal delay section **133** may be omitted in the voice communication apparatus according to the first embodiment of the present invention if the first propagation time is negligible small. The second near-end signal delay section **134,** on the other hand, may be omitted in the voice communication apparatus according to the first embodiment of the present invention if the second propagation time is negligible small.

With the second near-end signal delay section **134** omitted in the voice communication apparatus according to the first embodiment of the present invention, the first outputting section **135** may be operative to output a signal indicative of the signal difference between the first near-end signal delayed by the first near-end signal delay section **133** and the second near-end signal converted by the second near-end voice converting unit **122.**

If, on the other hand, the first suppressed near-end signal outputting unit **130** includes a first near-end signal delay section **133** and a second near-end signal delay section **134** in the voice communication apparatus according to the first embodiment of the present invention, the first outputting section **135** is operative to output the signal indicative of the signal difference between the first near-end signal delayed by the first near-end signal delay section **133** and the second near-end signal delayed by the second near-end signal delay section **134** if, for example, the first and second near-end signal delay sections **133** and **134** are omitted in the voice communication apparatus according to first embodiment of the present invention.

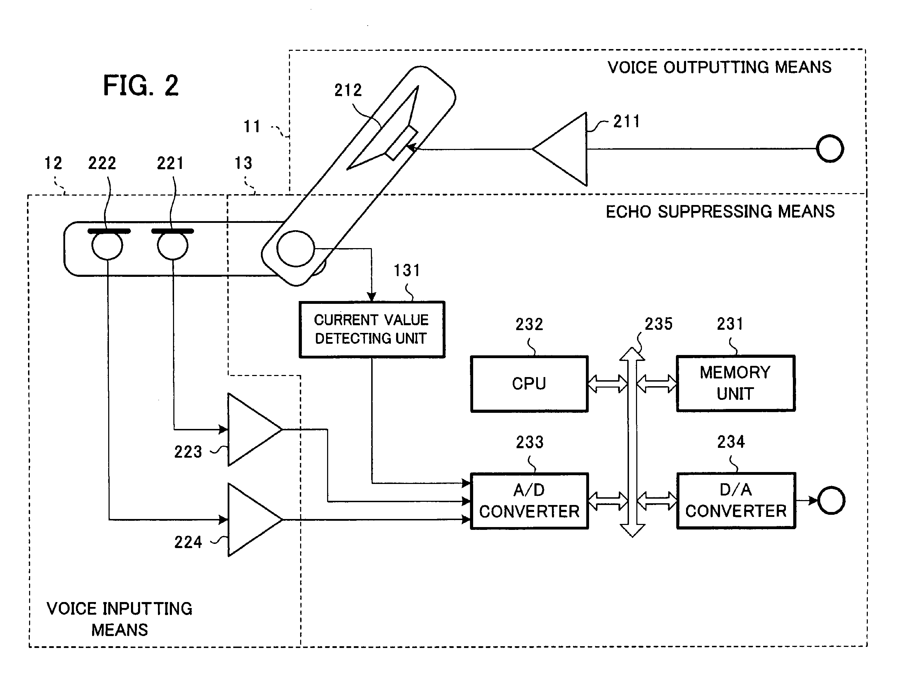

The hardware constitution of the first embodiment of the voice communication apparatus according to the present invention will be described hereinafter with reference to FIG **2.**

As shown in FIG. **2,** the far-end signal converting unit **112** of the voice outputting means **11** is constituted by a far-end signal amplifier **211** and a speaker unit **212**. The first microphone unit **221** and the first near-end signal amplifier **223** collectively constitute a first near-end voice converting unit **121** of the voice inputting means **12**. The second microphone unit **222** and the second near-end signal amplifier **224** collectively constitute a second near-end voice converting unit **122** of the voice inputting means **12.**

The current value detecting unit **131** of the echo suppressing means **13** may be constituted by a detector such as for example a rotary encoder and a potentiometer. The detector is operative to detect a current parameter value related to the current relative location of either the first near-end voice converting unit **121** or the second near-end voice converting unit **122** with respect to the far-end signal converting unit **112** to convert the parameter value to an electric signal. Here, the current parameter value related to the current relative location of either the first near-end voice converting unit **121** or the second near-end voice converting unit **122** with respect to the far-end signal converting unit **112** may be detected in a discontinuous manner by the detector. For example, the detector may be replaced by a switching element for selectively switching its own open and closed states by detecting whether or not the relative location of either the first near-end voice converting unit **121** or the second near-end voice converting unit **122** with respect to the far-end signal converting unit **112** is equal to at least one specific position.

On the other hand, the constitutional elements of the echo suppressing means **13** collectively are constituted by a central processing unit (CPU) **232** except for the current value detecting unit 131. The central processing unit (CPU) 232 is operative to execute an echo-suppressing program stored in a memory unit 231.

The echo suppressing means 13 further includes an analogue-to-digital converter 233 (hereinafter simply referred to as "A/D converter") for converting each of the near-end signals respectively outputted by the first and second near-end signal amplifiers 223 and 224 and the parameter value to a digital signal and a digital-to-analogue converter 234 (hereinafter simply referred to as "D/A converter") for converting the suppressed near-end signal to an analogue signal. The memory unit **231,** the CPU **232,** the A/D converter **233** and the D/A converter 234 are electrically connected to one another through a bus line 235. Here, if the current value detecting unit 131 is constituted by the switching element, the echo suppressing means 13 may further include a digital input interface unit have inputted therein the current parameter value to be received by the CPU 232.

The hardware construction of each of the second and third embodiments of the voice communication apparatus is substantially the same as that of first embodiment of the voice communication apparatus. Therefore, the hardware construction of each of the second and third embodiments of the voice communication apparatus will not be described hereinafter.

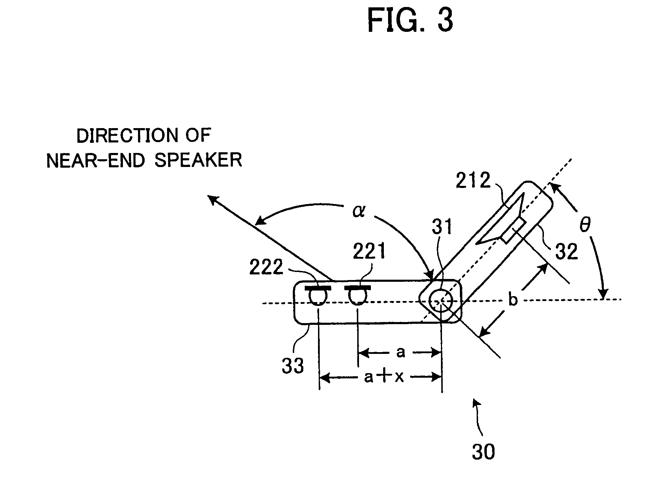

The following description will be then directed to the first and second functions of the first propagation time calculating unit 132 of the echo suppressing means 13 of the mobile phone 30 which is shown in FIG 3 as one embodiment of the voice communication apparatus according to the present invention. The current parameter value detected by the current value detecting unit 131 is defined as its independent variable in each of the first and second functions. Each of the first propagation time of the far-end voice converted by the far-end signal converting unit 112 to the distance between the far-end signal converting unit 112 and the first near-end voice converting unit 121 and the second propagation time of the far-end voice converted by the far-end signal converting unit 112 to the distance between the far-end signal converting unit 112 and the second near-end voice converting unit 122 is defined as its dependent variable in each of the first and second functions.

The mobile phone 30 comprises a housing having first and second complementary sections 32 and 33 and a hinge 31 having a reference point. The hinge 31 intervenes between the first complementary section 32 and the second complementary section 33 as a reference point to allow the first and second complementary sections 32 and 33 to be angularly movable with respect to each other. The first complementary section 32 accommodates the speaker unit 212 of the far-end signal converting unit 112, while the second complementary section 33 accommodates the first and second microphone units 221 and 222 of the first and second near-end voice converting units 121 and 122.

Each of the distance "a" between the hinge 31 and the first microphone unit 221, the distance "(a + x)" between the hinge 31 and the second microphone unit 222, and the distance "b" between the hinge 31 and the speaker unit 212 is substantially invariable under the condition that the first and second complimentary sections 32 and 33 are angularly moved with respect to each other.

The angle (see FIG. 3) "θ" of the first complementary section 32 to the second complementary section 33 is required, as a parameter related to the relative location of either the first microphone unit 221 or the second microphone unit 222 with respect to the speaker unit 212, for the CPU 232 to calculate the distance between the far-end signal converting unit 112 and either the first near-end voice converting unit 121 or the second near-end voice converting unit 122.

The propagation time **"T1"** of the far-end voice to the distance between the far-end signal converting unit 112 and the first near-end voice converting unit 121 is defined as a function of the angle " θ ", and represented by the following equation (1). The propagation time "T2" of the far-end voice to the distance between the far-end signal converting unit 112 and the second near-end voice converting unit 122 is defined as a function of the angle "θ", and represented by the following equation (2).

$$T_1 = \sqrt{a^2 + b^2 + 2ab \cdot \cos\theta} \, / \, v \qquad\qquad (1)$$

$$T_1 = \sqrt{a^2 + b^2 + 2ab \cdot \cos\theta + 2x(b \cdot \cos\theta + a) + x^2} \, / \, v \qquad\qquad (2)$$

wherein the legend "v" is a voice speed.

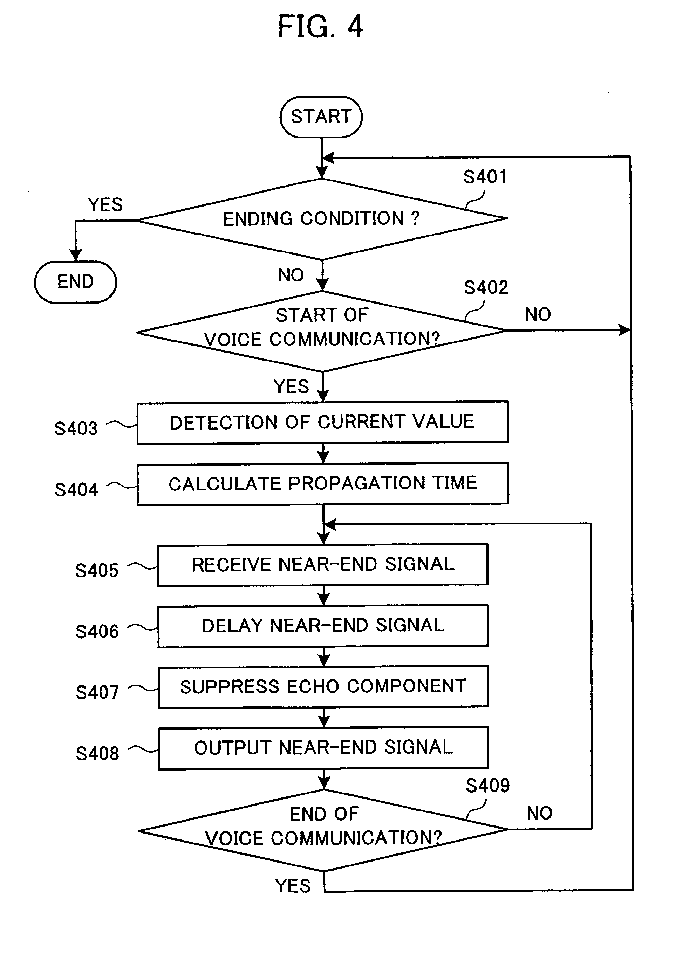

The operation of the echo suppressing means 13 of the voice communication apparatus according to first embodiment of the present invention will be described hereinafter with reference to FIG 4.

The judgment is firstly made by the echo suppressing means 13 on whether or not voice communication ending conditions are fulfilled in the voice communication apparatus, for example, on whether or not the voice communication apparatus is in an on-hook state (in step **S401**). When the judgment is made in the step **S401** that the voice communication ending conditions are fulfilled in the voice communication apparatus, the echo suppressing means 13 is operated to stop the operation of suppressing the echo component of the near-end signal. When, on the other hand, judgment is made in the step **S401** that the voice communication ending conditions are not fulfilled in the voice communication apparatus, the judgment is made on whether or not the voice communication is started between the far-end speaker and the near-end speaker on the basis of the signal level of the near-end signal (in step **S402**).

When the judgment is made in the step **S402** that the voice communication is not started between the far-end speaker and the near-end speaker, the step **S402** proceeds to the step **S401.** When, on the other hand, the judgment is made in the step **S402** that the voice communication is started between the far-end speaker and the near-end speaker, the current parameter value related to the current relative location of either the first near-end voice converting unit 121 or the second near-end voice converting unit 122 with respect to the far-end signal converting unit 112 is detected by the current value detecting unit 131. The current parameter value is then received from the current value detecting unit 131 through the A/D converter **233** by the CPU **232** (in step **S403**).

The current parameter value received from the current value detecting unit 131 through the A/D converter **233** is then substituted for the independent variable of each of the first and second functions, the first function being provided with the first propagation time of the far-end voice converted by the far-end signal converting unit 112 to the distance between the far-end signal converting unit 112 and the first near-end voice converting unit 121 defined as its dependent variable and the current parameter value defined as its independent variable, and the second function being provided with the second propagation time of the far-end voice converted by the far-end signal converting unit 112 to the distance between the far-end signal converting unit 112 and the second near-end voice converting unit 122 defined as its dependent variable and the current parameter value defined as its independent variable (in step **S404**). The operation in the step **S404** is performed by the first propagation time calculating unit 132.

The first near-end signal is received from the first near-end voice converting unit **121** through the A/D converter **233** by the CPU **232,** while the second near-end signal received from the second near-end voice converting unit **122** through the A/D converter **233** by the CPU **232** (in step **S405**). The first near-end signal is delayed by the first near-end signal delay section 133 on the basis of the first propagation time calculated by the first propagation time calculating unit 132, while the second near-end signal is delayed by the second near-end signal delay section 134 on the basis of the second propagation time calculated by the first propagation time calculating unit **132** (in step **S406**).

As a method of delaying the near-end signal, the near-end signal may be delayed by a shift register with the delay time approximated by an integral multiple of a sampling rate of the near-end signal. If the above mentioned delay section is constituted by a finite impulse response (FIR) filter, the near-end signal can be more accurately delayed by the FIR filter in comparison with the shift register.

Here, the operation in the step **S406** is performed by each of the first and second near-end signal delay sections 133 and 134.

The echo component of the near-end signal is suppressed as a result of the fact that by calculating the signal difference between first near-end signal delayed by the first near-end signal delay section 133 and the second near-end signal delayed by the second near-end signal delay section **134** (in step **S407**). Here, the operation in the step **S407** is performed by each of the first and second near-end signal delay sections 133 and 134.

Here, the operation in the steps **S406** and **S408** is performed by the first outputting section 135.

The first suppressed near-end signal is then converted to an analogue signal, and outputted by the D/A converter **234** (in step **S408**).

The judgment is made (in step **S409**) on whether or not the voice communication is completed between the far-end speaker and the near-end speaker by judging whether or not, for example, the near-end signal is equal to or smaller in signal level than a predetermined threshold level. When the judgment is made in the step **S409** that the near-end signal is larger in signal level than the predetermined threshold level, and that the voice communication is not completed between the far-end speaker and the near-end speaker, the step **S409** proceed to the step **S405.** When, on the other hand, the judgment is made in the step **S409** that the near-end signal is small in signal level than the predetermined threshold level, and that the voice communication is completed between the far-end speaker and the near-end speaker, the judgment is made (in step **S401**) on whether or not to fulfill a voice communication ending condition, for example, the voice communication apparatus is in an on-hook state.

In the above mentioned process, the first propagation time calculated by the first propagation time calculating unit 132 is set in advance as a delay time in the first near-end signal delay section 133, while the second propagation time calculated by the first propagation time calculating unit 132 is set in advance as a delay time in the second near-end signal delay section 134.

From a practical standpoint, it is preferable that the propagation time of the far-end voice converted by the far-end signal converting unit 112 to the distance between the far-end signal converting unit 112 and one of the first and second near-end voice converting units 121 and 122 is set in advance as a fixed delay time in one of the first and second near-end signal delay sections 133 and 134, while the propagation time of the far-end voice converted by the far-end signal converting unit 112 to the distance between the far-end signal converting unit **112** and the other of the first and second near-end voice converting units **121** and **122** is set in advance as a variable delay time in the other of the first and second near-end signal delay sections **133** and **134.**

If the relative location of either the first near-end voice converting unit **121** or the second near-end voice converting unit **122** with respect to the far-end signal converting unit 112 can be specified by the voice communication apparatus, it is easy to update the variable delay time set in advance in response to the varied relative location of either the first near-end voice converting unit **121** or the second near-end voice converting unit **122** with respect to the far-end signal converting unit **112.** If the variable delay time is smaller than the fixed delay time, in other words, the variable delay time is a negative, it is easy to update both the fixed delay time and the variable delay time.

From the above detail description, it will be understood that the first embodiment of the voice communication apparatus according to the present invention can reliably suppress the echo component of the near-end signal to be transmitted to the far-end speaker without being affected by the varied relative location of either the first near-end voice converting unit **121** or the second near-end voice converting unit **122** with respect to the far-end signal converting unit **112** by reason that the echo suppressing means **13** of the voice communication apparatus comprises a current value detecting unit **131,** a first propagation time calculating unit **132,** a first near-end signal delay section **133,** a second near-end signal delay section **134** and a first outputting section **135.**

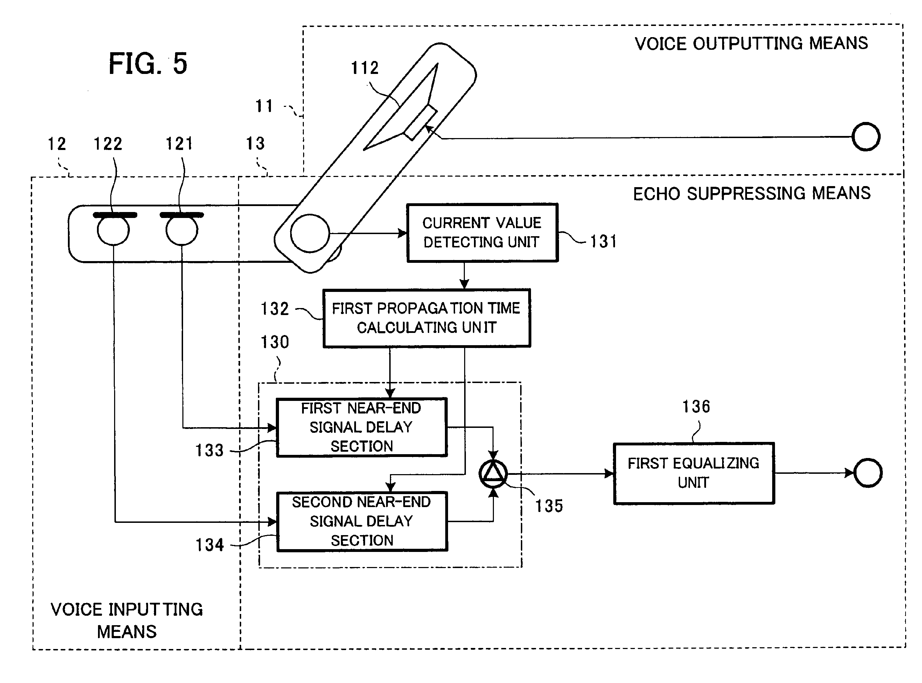

As shown in FIG 5, the echo suppressing means **13** of the voice communication apparatus according to the first embodiment of the present invention may further include a first equalizing unit **136,** as an element electrically connected to the output side of the first suppressed near-end signal outputting unit **130,** for equalizing a frequency spectrum of the first suppressed near-end signal outputted by the first suppressed near-end signal outputting unit **130** on the basis of the current parameter value detected by the current value detecting unit **131.**

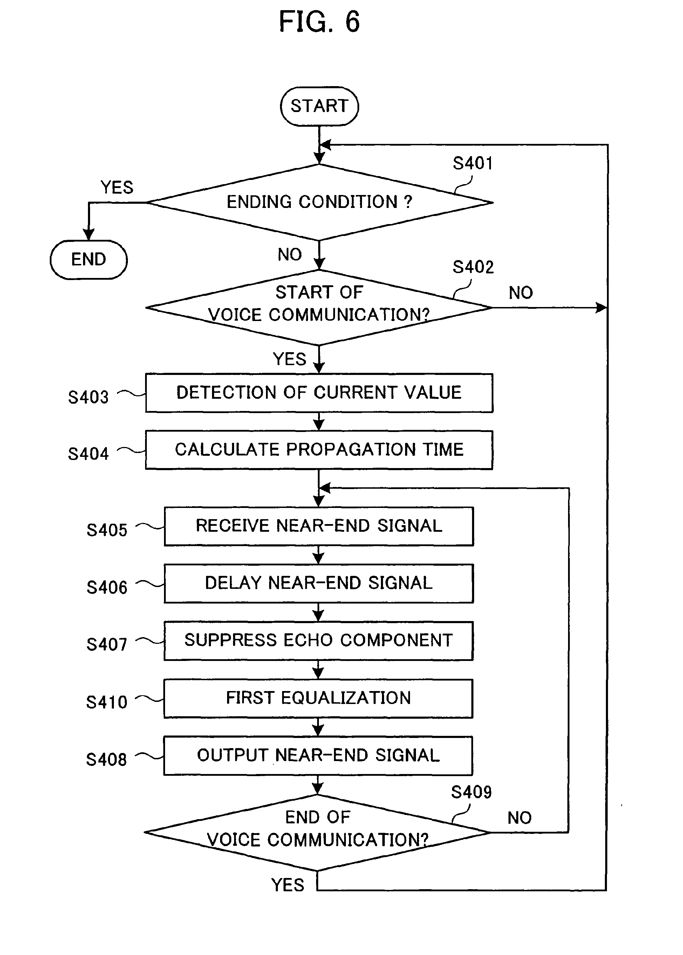

The operation of the voice communication apparatus shown in the flowchart of FIG. 6 is the same as the operation of the voice communication apparatus shown in the flowchart of **FIG. 4** with the exception of the operation (in step **S410)** of the first equalizing unit **136** for equalizing the frequency spectrum of the suppressed near-end signal.

In this case, the operation of the first equalizing unit **136** is realized by having the CPU **232** execute a program stored in the memory unit **231.**

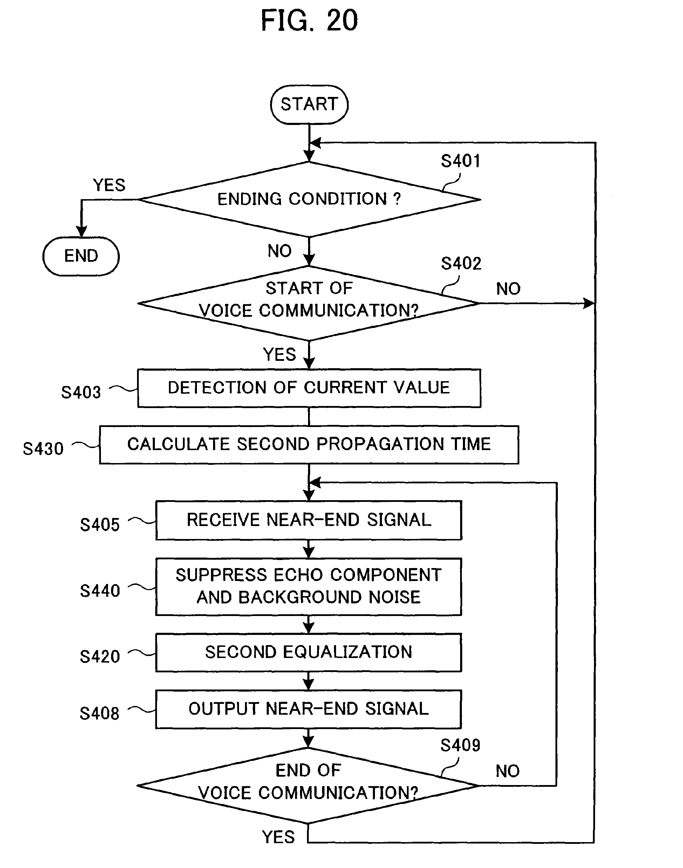

The operation to be performed in the steps **S401** to **S440, S408** and **S409** shown in FIG 20 are substantially the same as the operation to be performed in the steps **S401** to **S440, S408** and **S409** shown in FIG. **4.** Therefore, the steps **S401** to **S440, S408** and **S409** shown in FIG 20 will be described hereinafter.

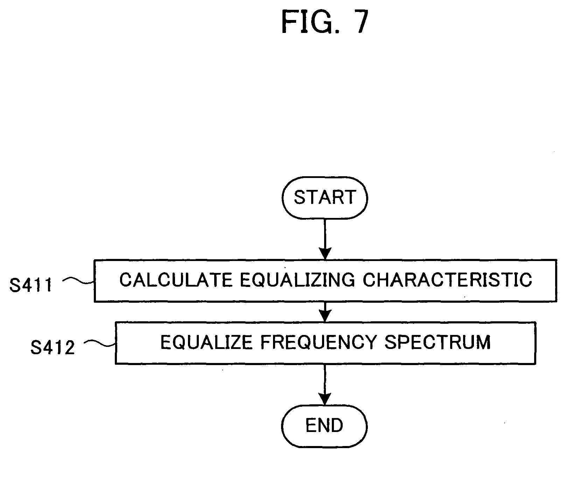

The operation of the first equalizing unit **136** will be then described thereinafter with reference to the flowchart of FIG **7.**

The echo component of the near-end signal is firstly suppressed (in step S407). The equalization characteristic is then calculated from the equalization characteristic stored in advance in the memory unit **231** on the basis of the current parameter value detected by the current value detecting unit **131** (in step **S411**). The frequency spectrum of the near-end signal is equalized (in step **S412).** The above mentioned operation is performed by the first equalizing unit **136.**

The following description will be directed to the first equalizing unit **136** under the condition that the voice communication apparatus according to the present invention is constituted by a mobile phone which comprises a housing having two complementary sections.

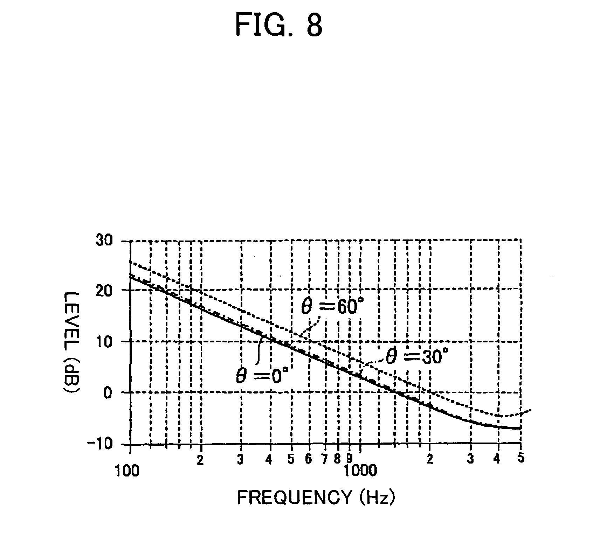

FIG 8 is a graph showing the relationship between the signal level of the suppressed near-end signal and the frequency of the suppressed near-end signal under the condition that the near-end speaker occupies the second reference point spaced apart from the far-end signal converting unit **112,** and the angle of one of the complementary sections **32** and **33** to the other of the complementary sections **32** and **33** is equal to the angle of each of **0** degree, **30** degrees and **60** degrees. The data on the suppressed near-end signal shown in FIG 8 is stored in advance in the memory unit **231.**

When, for example, the judgment is made that the angle of one of the complementary sections **32** and **33** to the other of the complementary sections **32** and **33** is equal to the angle of **30** degrees on the basis of the current value detected by the current value detecting unit **131,** one equalization characteristic indicated by the alternative long and short dash line in FIG **8** is selected from among the equalization characteristics stored in the memory unit **231.**

If the judgment is made that the angle of one of the complementary sections **32** and **33** to the other of the complementary sections **32** and **33** the is equal to the angle of **45** degrees on the basis of the current value detected by the current value detecting unit 131, the equalization characteristic corresponding to the angle of **45** degrees is calculated from the selected equalization characteristic on the basis of an interpolation method or other method by reason that the equalization characteristic corresponding to the angle of **45** degrees is not stored in advance in the memory unit **231.**

From the above detail description, it will be understood that the voice communication apparatus can maintain the quality of the near-end voice signal to be transmitted to the far-end speaker by preventing the frequency spectrum of the suppressed near-end signal from being deteriorated in response to the varied relative location of the voice inputting means **12** with respect to the voice outputting means **11** by reason that the echo suppressing means **13** further includes a first equalizing unit **136,** as an element electrically connected to the output side of the first suppressed near-end signal outputting unit 130, for equalizing a frequency spectrum of the first suppressed near-end signal on the basis of the current parameter value detected by the current value detecting unit **131.**

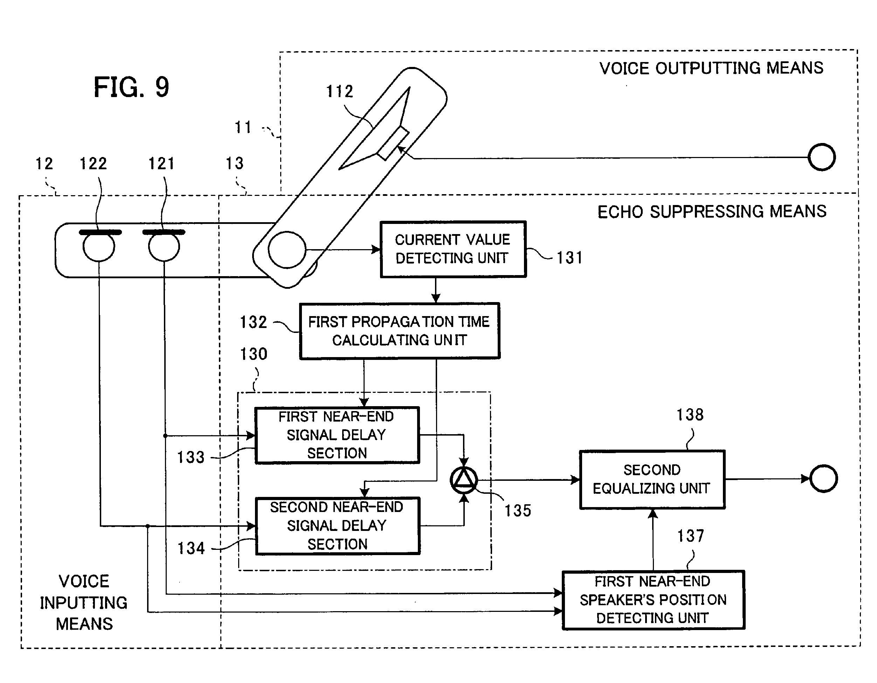

As shown in FIG **9,** the echo suppressing means **13** of the voice communication apparatus according to the first embodiment of the present invention may include a first near-end speaker's position detecting unit **137** for detecting, as a first near-end speaker's position, a position of the near-end speaker to either the first near-end voice converting unit **121** or the second near-end voice converting unit **122** on the basis of the cross-correlation function between the first near-end signal converted by the first near-end voice converting unit **121** and the second near-end signal converted by the second near-end voice converting unit **122,** and a second equalizing unit **138** for equalizing a frequency spectrum of the first suppressed near-end signal outputted by the first suppressed near-end signal outputting unit **130** on the basis of the current parameter value detected by the current value detecting unit **131** and the position of the near-end speaker detected by the first near-end speaker's position detecting unit **137.**

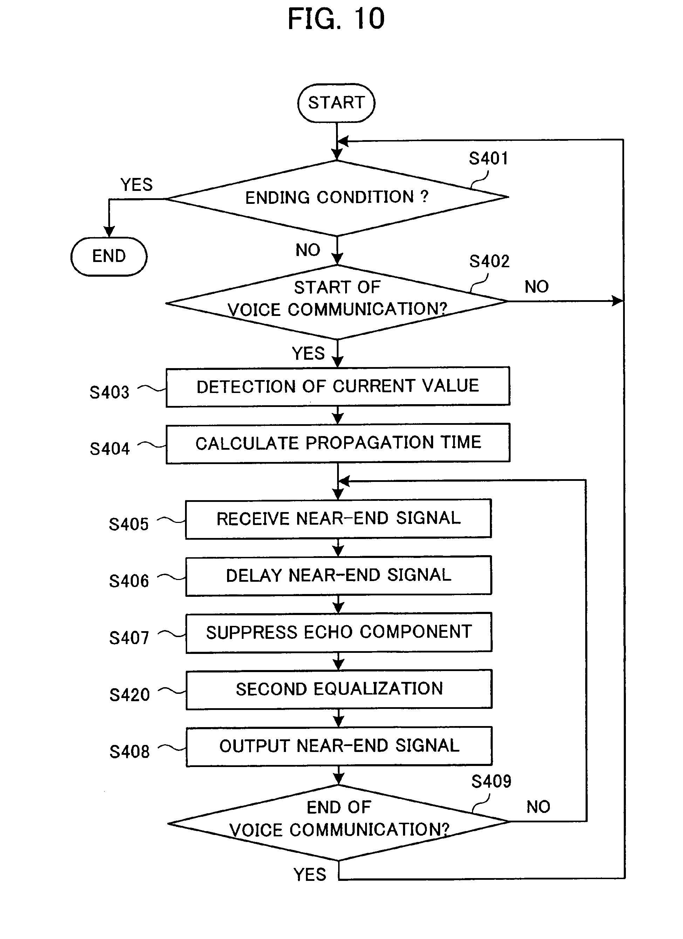

The operation of the voice communication apparatus shown in the flowchart of FIG **10** is the same as the operation of the voice communication apparatus shown in the flowchart of FIG **4** with the exception of the operation to be performed (in step **S420**) by the second equalizing unit **138** for equalizing the frequency spectrum of the suppressed near-end signal. The operation to be performed in the steps **S401** to **S407**, **S408** and **S409** shown in FIG. **10** are substantially the same as the operation to be performed in the steps **S401** to **S407, S408** and **S409** shown in **FIG 4.** Therefore, the operation to be performed in the steps **S401** to **S407, S408** and **S409** shown in **FIG 10** will be described hereinafter.

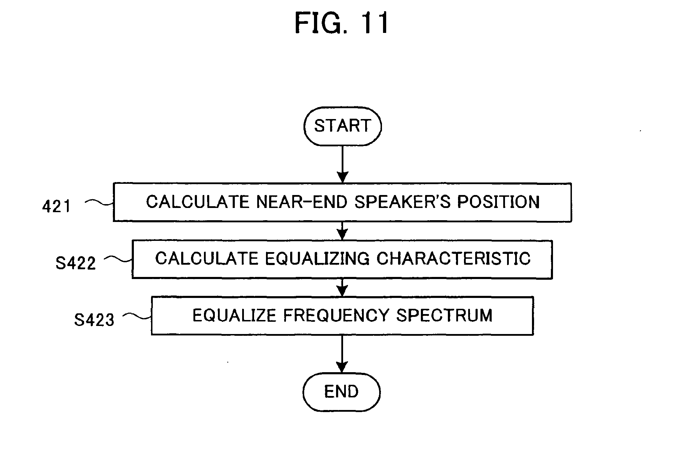

The operation of the second equalizing unit 138 will be then described hereinafter with reference to FIG **11.** The judgment is firstly made on whether or not the far-end signal is detected over a predetermined period. In general, the judgment is made on whether or not the signal level of the far-end signal is equal to or smaller than a predetermined and fixed threshold level. However, the average of the far-end signal detected over a predetermined period may be calculated as a threshold level, if the far-end signal has a noise, before the judgment is made on whether or not the far-end signal is equal to or smaller than the calculated threshold level.

When the judgment is made that the far-end signal is not detected over the predetermined period, the judgment is made on whether or not the near-end sound is detected. Here, the judgment may be made on whether or not the signal level of the near-end signal is equal to or smaller than a fixed threshold level or a threshold level determined with the average of the near-end signal detected over a predetermined period. If the near-end signal has a relatively high background noise, the white cross-correlation may be calculated before the maximum value of the cross-correlation is equal to or larger than a reference value (0.5 to 0.7).

Here, the term "white cross-correlation function" is intended to indicate a function defining an inverse Fourier transformation of the normalization of a cross-spectrum between the first near-end signal converted by the first near-end voice converting unit 121 and the second near-end signal converted by the second near-end voice converting unit 122 with respect to the product of the first near-end signal converted by the first near-end voice converting unit 121 and the second near-end signal converted by the second near-end voice converting unit 122.

When the judgment is made that the near-end sound is being detected under the condition that the far-end signal is not being detected, the white cross-correlation between the first near-end signal converted by the first near-end voice converting unit 121 and the second near-end signal converted by the second near-end voice converting unit 122 is calculated before the first near-end speaker's position indicative of the position of the near-end speaker to either the first near-end voice converting unit **121** or the second near-end voice converting unit **122** is calculated (in step **S421**). Here, the operation in the above mentioned step **S421** is performed by the first near-end speaker's position detecting unit 137.

The equalization characteristic is then calculated from the equalization characteristic stored in advance in the memory unit 231 on the basis of the current parameter value detected by the current value detecting unit 131 and the near-end speaker's position detected by the first near-end speaker's position detecting section **137** (in step **S422**). The frequency spectrum of the near-end signal is equalized on the basis of the calculated equalization characteristic (in step **S423**). The above mentioned operation is performed by the second equalizing unit 138.

From the above detail description, it will be understood that the voice communication apparatus can maintain the quality of the near-end voice signal to be transmitted to the far-end speaker by reason that the frequency spectrum of the near-end signal is equalized by the second equalizing unit 138, even if the first reference position is occupied by the near-end speaker, by reason that the echo suppressing means 13 further includes a first near-end speaker's position detecting section 137 and a second equalizing unit 138.

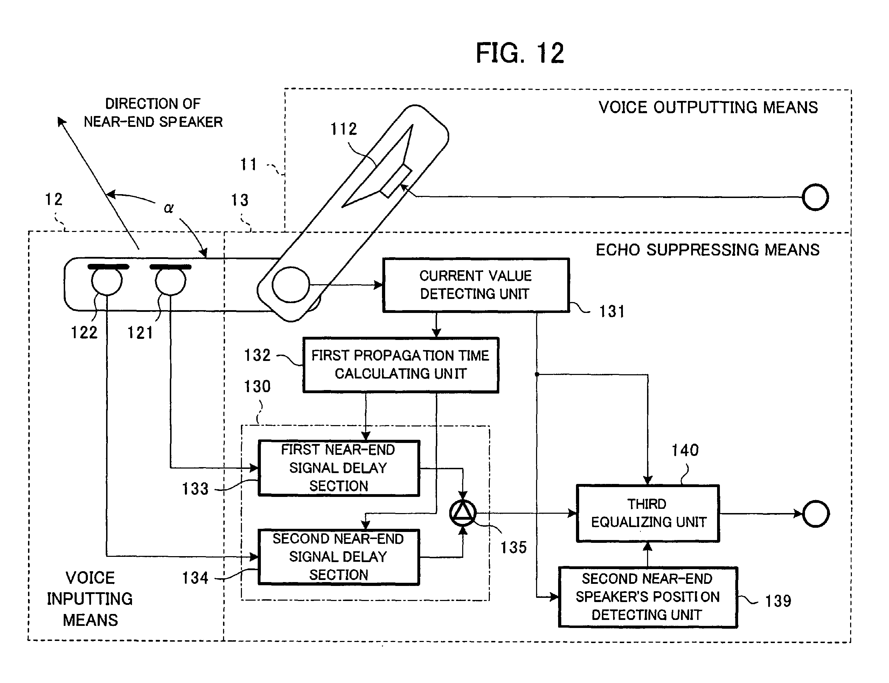

As shown in FIG 12, the voice communication apparatus according to the first embodiment of the present invention may further include a second near-end speaker's position detecting unit **139** for detecting, as a second near-end speaker's position, a current position of the near-end speaker with respect to the far-end signal converting unit **112** on the basis of the current parameter value detected by the current value detecting unit **131,** and a third equalizing unit **140** for equalizing a frequency spectrum of the first suppressed near-end signal outputted by the first suppressed near-end signal outputting unit **130** with respect to the current parameter value detected by the current value detecting unit **131** and the second near-end speaker's position detected by the second near-end speaker's position detecting unit **139.**

In the above mentioned voice communication apparatus, the equalization characteristic is calculated with the assumption that the second reference position is occupied by the near-end speaker.

When the above mentioned voice communication apparatus constituted by a mobile phone comprising a housing having two complementary sections is utilized by the near-end speaker, the position of the near-end speaker is in the direction of the angle "$\alpha$" (see FIGS. **3** and **12**). Therefore, the propagation time of the near-end voice to each of the first and second near-end voice converting units **121** and **122** is defined as a function of the angle of the first complementary section **32** with respect to the second complemenray section 33 with the assumption that the second reference position is occupied by the near-end speaker. This means that the angle "α "of the near-end speaker with respect to the second complementary section 33 and the propagation time of the near-end voice to each of the first and second near-end voice converting units **121** and **122** can be calculated on the basis of the current parameter value detected by the current value detecting unit **131**.

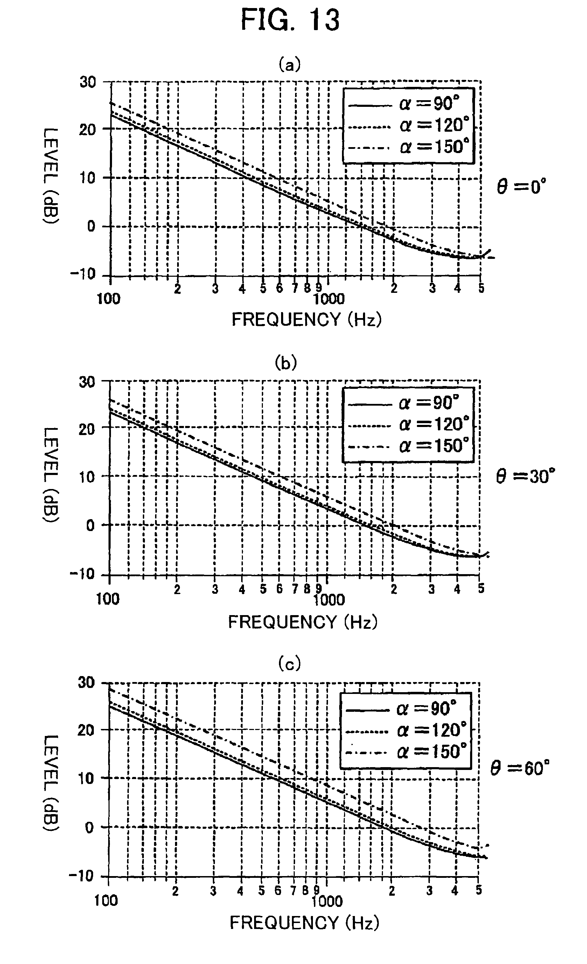

The operation of the third equalizing unit **140** of the above mentioned voice communication apparatus, which is constituted by a mobile phone comprising a housing having two complementary sections, will be described hereinafter with reference to FIGS. **13(a)** to **13(c)**.

The graphs of FIGS. **13(a)** to **13(c)** shows the frequency spectrum of the suppressed near-end signal in association with respective angles including **"0", "30"** and **"60"** degrees defined as a parameter indicative of the angle of the frist complementary section **32** with respect to the second complementary section **33**. The data on the frequency spectrum of the suppressed near-end signal shown in each of the graphs of FIGS. **13(a)** to **13(c)** is stored in advance in the memory unit **231**.

Here, the three different lines including the alternate long and short dash line, the short dashed line and the continuous line represent the frequency spectrum of the suppressed near-end signal in each of the graphs of FIG. **13 (a)** to **13(c)** in association with three different angles including **"90", "120"** amd **"150"** degrees defined as a parameter indicative of the angle of the near-end speaker with respect to the second complementary section **33**.

When the judgment is made that the angle of the frist complementary section **32** with respect to the second complementary section **33** is equal to the angle of **30** degrees on the basis of the current parameter value detected by the current value detecting unit **131,** and that the angle of the near-end speaker with respect to the second complementary section **33** is equal to the angle of **120** degrees on the basis of the positon of the near-end speaker detected by the second near-end speaker's position detecting unit **139,** the equalization characteristic represented by the short dashed line of FIG. **13(b)** is selected from among the equalization characteristics represented by the lines of FIG **13(a)** to **13 (c).** The frequency spectrum of the suppressed near-end signal is then equalized on the basis of the selected equalization characteristic. When, on the other hand, the judgment is made that the equalization characteristic matched with the above mentioned angle is not stored in the meamory unit 231, the equalization characteristic is calculated from the equalization characteristics stored in the memory unit **231** on the basis of the interpolation method.

From the above detail description, it will be understood that the voice communication apparatus according to the first embodiment can maintain the quality of the near-end signal to be transmitted to a far-end speaker even if the near-end speaker is spaced apart from the second reference position by reason that echo suppressing means **13** further includes a second near-end speaker's position detecting unit **139** and a third equalizing unit **140**. The second near-end speaker's position detecting unit **139** can be simple in construction in comparison with the first near-end speaker's position detecting unit **137**.

(second embodiment)

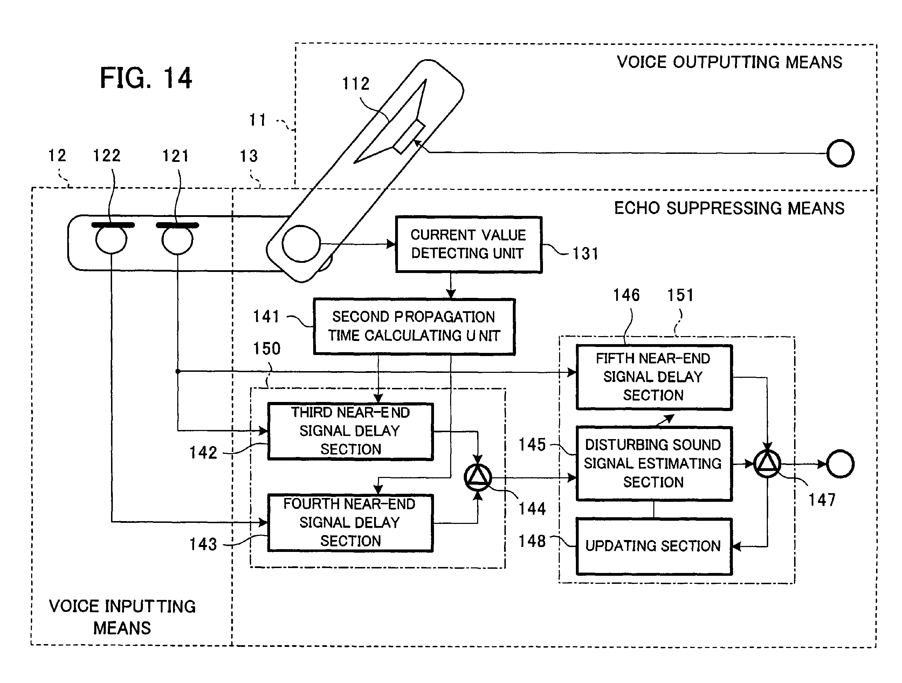

The constitution of the second embodiment of the voice communication apparatus according to the present invention will be then described hereinafter with reference to FIG. **14**.

The voice communication apparatus according to the second embedment of the present invention comprises voice outputting means **11** for outputting a far-end voice indicative of a far-end signal, voice inputting means **12** for inputting a near-end voice, and echo suppressing means **13** for suppressing an echo generated by the voice inputting means 12 from the far-end voice outputted by the voice outputting means **11**.

The voice outputting means **11** includes a far-end signal converting unit **112** spaced apart from the reference point with a predetermined first distance, and adapted to convert the far-end signal to the far-end voice.

The voice inputting means **12** includes a first near-end voice converting unit **121** spaced apart from the reference point with a predetermined second distance, and adapted to convert the inputted near-end voice to a first near-end signal, and a second near-end voice converting unit **122** disposed at a predetermined position in spaced relationship with the first near-end voice converting unit **121,** and adapted to convert the inputted near-end voice to a second near-end signal.

The echo suppressing means **13** includes a current value detecting unit **131** for detecting a current parameter value indicative of a current relative location of either the first near-end voice converting unit **121** or the second near-end voice converting unit **122** with respect to the far-end signal converting unit **112,** a second propagation time calculating unit 141 for calculating a third propagation time of the near-end voice to be received by the first near-end voice converting unit **121** with respect to the current parameter value detected by the current value detecting unit **131** on the basis of a third function to be provided with the parameter value defined as its independent variable and the third propagation time defined as its dependent variable, and a fourth propagation time of the near-end voice to be received by the second near-end voice converting unit **122** with respect to the current parameter value detected by the current value detecting unit **131** on the basis of a fourth function to be provided with the parameter value defined as its independent variable and the fourth propagation time defined as its dependent variable, a remaining voice signal extracting unit 150 for extracting a remaining voice signal on the basis of its remaining voice signal extracting characteristic updated in response to the third and fourth propagation time calculated by the second propagation time calculating unit **141,** and a second suppressed near-end signal outputting unit **151** for outputting a second suppressed near-end signal by subtracting the remaining voice signal extracted by the remaining voice signal extracting unit **150** from either the first near-end signal converted by the first near-end voice converting unit **121** or the second near-end signal converted by the second near-end voice converting unit **122.**

The remaining voice signal extracting unit **150** includes a third near-end signal delay section **142** for delaying the first near-end signal converted by the first near-end voice converting unit **121** on the basis of the third propagation time calculated by the second propagation time calculating unit **141,** a fourth near-end signal delay section **143** for delaying the second near-end signal converted by the second near-end voice converting unit **122** on the basis of the fourth propagation time calculated by the second propagation time calculating unit **141,** and a remaining voice signal outputting section **144** for outputting, as a remaining voice signal, a signal indicative of the signal difference between the first near-end signal delayed by the first near-end signal delay section **133** and the second near-end signal delayed by the second near-end signal delay section **134.**

The second suppressed near-end signal outputting unit **151** includes a disturbing sound signal estimating section **145** for estimating a disturbing sound signal in either the first near-end signal converted by the first near-end voice converting unit **121** or the second near-end signal converted by the second near-end voice converting unit **122** on the basis of the remaining voice signal outputted by the remaining voice signal outputting section **144,** a fifth near-end signal delay section **146** for delaying either the first near-end signal converted by the first near-end voice converting unit **121** or the second near-end signal converted by the second near-end voice converting unit **122** with a delay time required to performing the estimation of the interfering near-end signal by the disturbing sound signal estimating section **145,** a second outputting section **147** for outputting a second suppressed near-end signal by subtracting the disturbing sound signal estimated by the disturbing sound signal estimating section **145** from the near-end signal delayed, as a fifth delayed near-end signal, by the fifth near-end signal delay section **146,** and an updating section **148** for sequentially updating the disturbing sound signal estimating characteristic of the disturbing sound signal estimating section **145** by performing the least squares estimation of the second suppressed near-end signal.

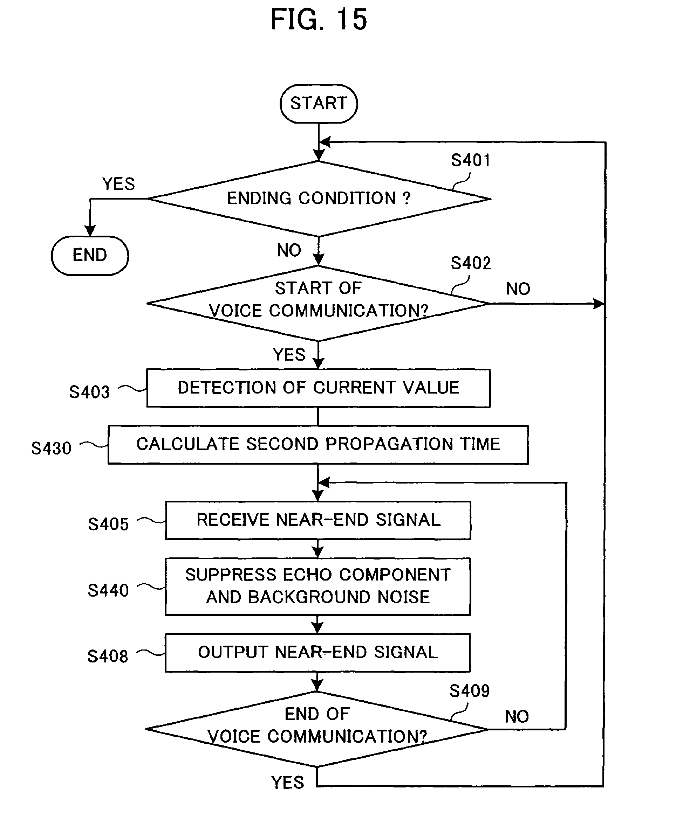

The operation of the echo suppressing means **13** of the voice communication apparatus according to the second embodiment of the present invention will be described hereinafter with reference to FIG **15**. The steps **S401** to **S403** of the voice communication apparatus shown in FIG. **15** are respectively the same as those of the voice communication apparatus according to the first embodiment. Therefore, the steps **S401** to **S403** shown in FIG. **15** will not described hereinafter.

The third propagation time of the near-end voice to be received by the first near-end voice converting unit **121** and the fourth propagation time of the near-end voice to be received by the second near-end voice converting unit **122** are calculated (in step **S430)** on the basis of the current parameter value detected in the step **S403**. If the near-end speaker occupies a second reference point in spaced and face-to-face relationship with the far-end signal converting unit **112,** the third propagation time of the near-end voice to be received by the first near-end voice converting unit **121** and the fourth propagation time of the near-end voice to be received by the second near-end voice converting unit **122** can be specified by a function of an angle of either the first near-end voice converting unit **121** or the second near-end voice converting unit **122** with respect to the far-end signal converting unit **112**. The above operation in the step **S430** is performed by the second propagation time calculating unit **141.**

As has been described about the white cross-correlation function in the first embodiment, the third propagation time of the near-end voice to be received by the first near-end voice converting unit **121** and the fourth propagation time of the near-end voice to be received by the second near-end voice converting unit **122** may be also calculated on the basis of the white cross-correlation function. However, the near-end signal to be transmitted to the far-end speaker may be deteriorated in response to the inadequately estimated propagation time just after the near-end speaker starts to communicate with the far-end speaker through the voice communication apparatus according to the present invention.

The near-end signal to be transmitted to the far-end speaker may be deteriorated in response to the propagation time calculated with the assumption that the near-end speaker occupies the second reference point although the near-end speaker is spaced apart from the second reference point.

Accordingly, the propagation time may be calculated with the assumption that the near-end speaker occupies the second reference point when the near-end speaker does not produce a sound to be received by the voice inputting means. When, on the other hand, the near-end speaker produces a sound to be received by the voice inputting means, the propagation time may be calculated on the basis of the white cross-correlation function.

The near-end signals are respectively received from the first and second near-end signal amplifiers **223** and **224** through the A/D converter **233** (in step **S405)**. The echo and background noise of the near-end signal to be transmitted to the far-end speaker is then suppressed (in step **S406)**.

The operation in the step **S408** to the final step shown in the **FIG 15** is the same as the operation of the echo communication apparatus according to the second embodiment of the present invention. Therefore, the operation in the step **S408** to the final step shown in the FIG **15** will not described hereinafter.

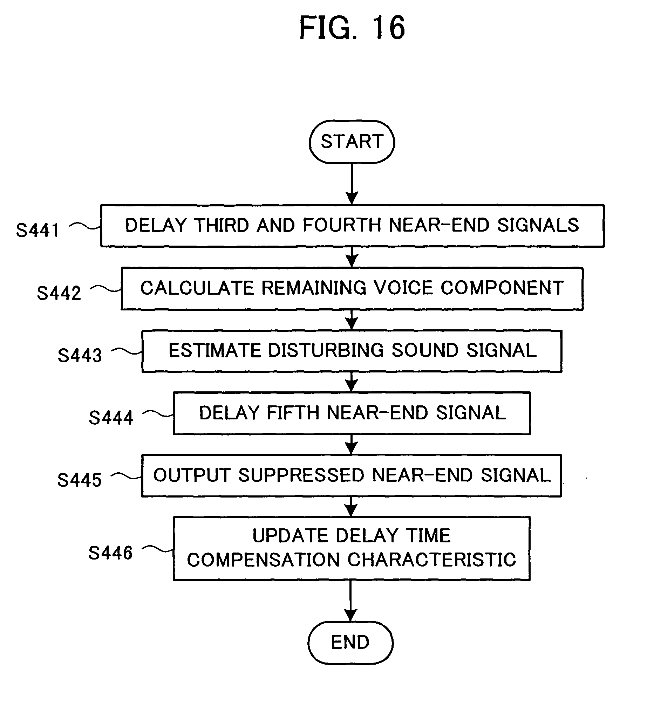

The operation to be performed in the step **S440** by the voice communication apparatus according to the second embodiment will be then described hereinafter with reference to FIG **16**.

The near-end signal is firstly delayed on the basis of the propagation time of the near-end sound to be received by either the first near-end voice converting unit **121** or the second near-end voice converting unit **122** (in step **S441**). The operation in the step **S441** is performed by the third and fourth near-end signal delay sections **142** and **143**.

The signal difference between the near-end signal delayed and outputted as a first delayed near-end signal by the third near-end signal delay section **142** and the near-end signal delayed and outputted as a first delayed near-end signal by the fourth near-end signal delay section **143** is then calculated and outputted as a remaining voice signal in which the near-end voice component of the near-end signal is canceled (in step **S442**). The operation in the step **S442** is performed by the remaining voice signal outputting section **144**.

The disturbing sound signal indicative of the disturbing sound such as a background noise mixed with the far-end voice outputted by the voice outputting means **11** is then estimated in either the first near-end signal or the second near-end signal on the basis of the remaining voice signal outputted by the remaining voice signal outputting section **144** by a conventionally known adaptive filter (in step **S443**). The operation in the step **S443** is performed by the disturbing sound signal estimating section **145**.

Either the first near-end signal or the second near-end signal, for example, the first near-end signal converted by the first near-end voice converting unit **121** is delayed with a delay time equivalent to an operation time required for the disturbing sound signal estimating section **145** to perform the estimation of the disturbing sound signal (in step **S444**). The operation in the step **S444** is performed by the fifth near-end signal delay section **146**.

The disturbing sound signal estimated in the step **S443** is subtracted from the delayed near-end signal. The signal difference between the near-end signal and the disturbed voice signal is then outputted as a signal in which the echo component and the background noise is suppressed (in step **S445**). The operation in the step **S445** is performed by the second outputting section **147**.

The disturbing sound signal estimating characteristic of the disturbing sound signal estimating section **145** is sequentially updated (in step **S446**) in order to minimize the least squares estimation of the suppressed near-end signal, i.e., the disturbing sound signal is minimized the near-end signal under the condition that the near-end voice component of the suppressed near-end signal is not being detected in the near-end signal (in step **5446**). The operation in the step **S446** is performed by the disturbing sound signal estimating characteristic updating section **148**.

Here, the disturbing sound signal estimating characteristic of the disturbing sound signal estimating section **145** may be updated on the basis of a conventionally known method such as for example a learning identification method and a first recursive least squares (FRLS) method.

From the above detail description, it will be understood that the voice communication apparatus according to the second embodiment of the present invention can reliably suppress the echo component and the background noise of the near-end signal to be transmitted to the far-end speaker in response to the varied relative location of either the first near-end voice converting unit **121** or the second near-end voice converting unit **122** with respect to the far-end signal converting unit **112** by reason that the echo suppressing means **13** includes a current value detecting unit **131**, a second propagation time calculating unit **141**, a third near-end signal delay section **142**, a fourth near-end signal delay section **143**, a remaining voice signal outputting section **144**, a disturbing sound signal estimating section **145**, a fifth near-end signal delay section **146**, a second outputting section **147**, and an updating section **148**.

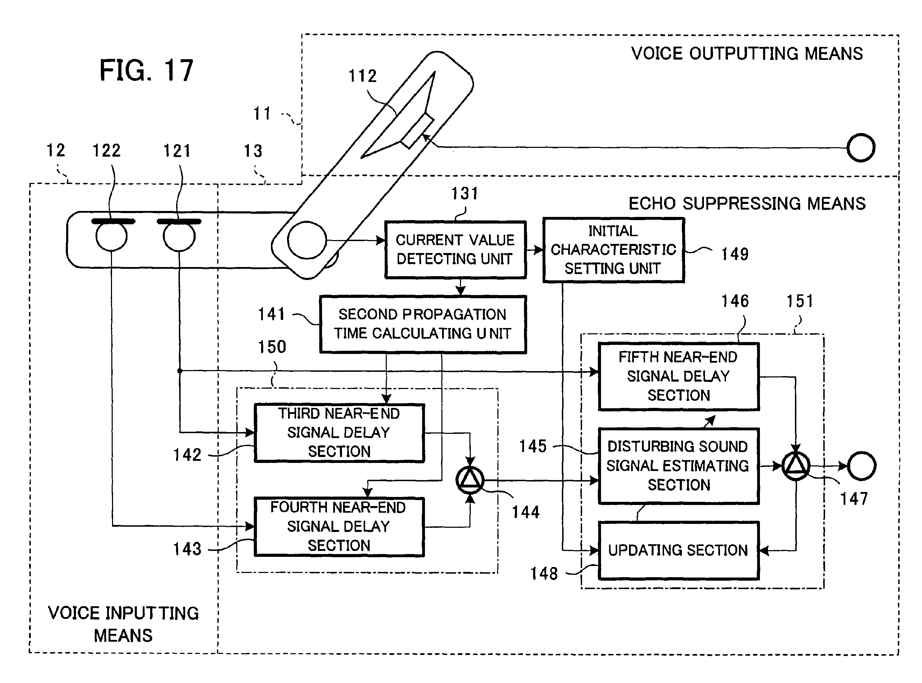

As shown in FIG. **17**, the echo suppressing means **13** of the voice communication apparatus according to the second embodiment of the present invention may further includes an initial characteristic setting unit **149** for setting an initial disturbing sound signal estimating characteristic of the updating section **148** on the basis of the current parameter value detected by the current value detecting unit **131**.

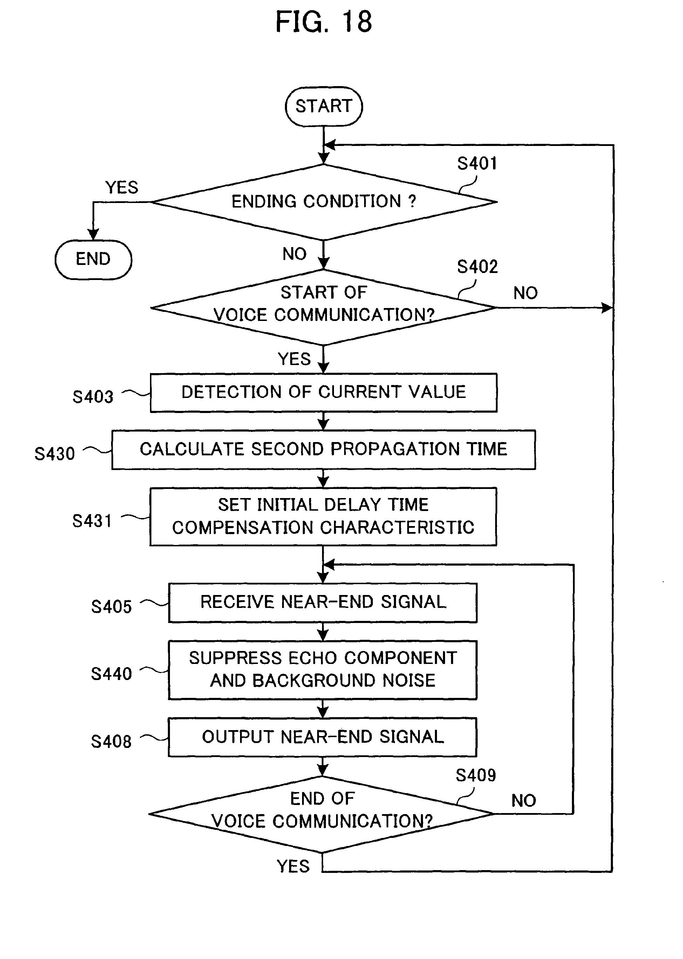

The operation of the echo suppressing means 13 will be then described hereinafter with reference to **FIG. 18.** The operation to be performed in the steps **S401** to **S430** is substantially the same as the operation to be performed by the echo suppressing means 13 of the communication apparatus according to the second embodiment. Therefore, the operation to be performed in the steps **S401** to **S430** will be described hereinafter.

When the second propagation time is calculated in the step **S430,** the initial disturbing sound signal estimating characteristic of the updating section **148** is set on the basis of the current parameter value detected by the current value detecting unit **131** (in step **431**). The operation in the step **S431** is performed by the initial characteristic setting unit **149**. If there is no information on initial disturbing sound signal estimating characteristic related to the current parameter value detected by the current value detecting unit **131,** the information on the initial disturbing sound signal estimating characteristic related to the current parameter value detected by the current value detecting unit **131** is produced from the information on the initial disturbing sound signal estimating characteristic stored in the memory unit **231** on the basis of the interpolation method or other conventional methods.

The operation to be performed in the step **S405** and subsequent steps is the same as the operation to be performed in the steps shown in FIG **15.** Therefore, the operation to be performed in the step **S405** and subsequent steps will not be described hereinafter.

From the above detail description, it will be understood that the above mentioned voice communication apparatus according to the present invention can rapidly converge the disturbing sound signal estimating characteristic of the disturbing sound signal estimating section **145** to an optimum disturbing sound signal estimating characteristic in which the average of the square of the suppressed near-end signal of the time domain reaches a minimum value, and more reliably suppress the echo component and the background noise of the near-end signal to be transmitted to the far-end speaker by reason that the echo suppressing means **13** further includes an initial characteristic setting unit **149.**

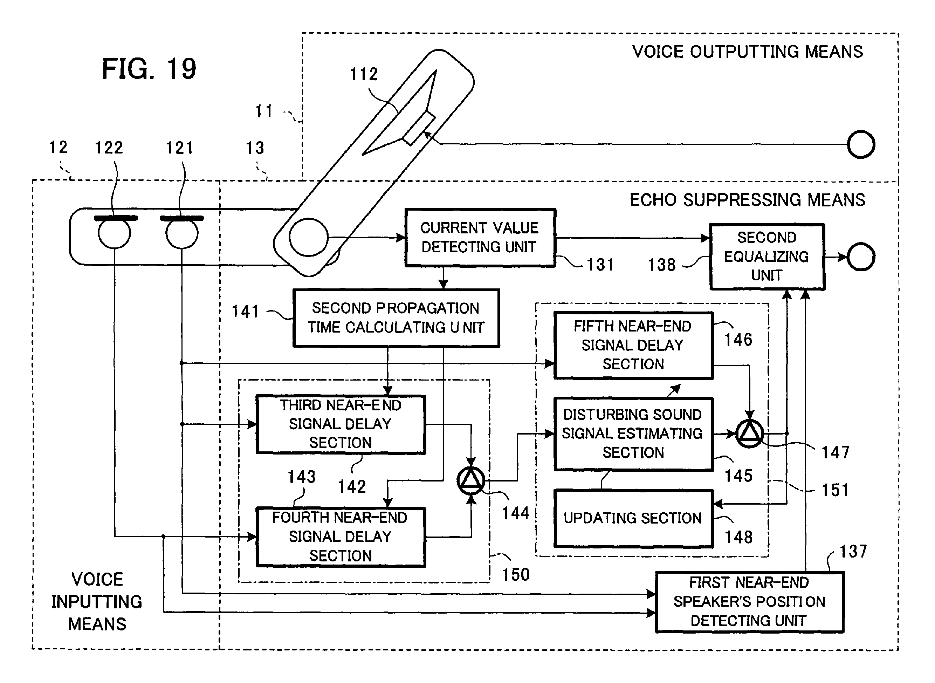

As shown in FIG **19,** the echo suppressing means **13** of the voice communication apparatus according to the second embodiment of the present invention includes a first near-end speaker's position detecting unit **137** for detecting, as a first near-end speaker's position, a position of the near-end speaker with respect to either the first near-end voice converting unit **121** or the second near-end voice converting unit **122** on the basis of the cross-correlation function between the first near-end signal converted by the first near-end voice converting unit **121** and the second near-end signal converted by the second near-end voice converting unit **122,** and a second equalizing unit **138** for equalizing a frequency spectrum of the first suppressed near-end signal outputted by the first suppressed near-end signal outputting unit **130** with respect to the current parameter value detected by the current value detecting unit **131** and the position of the near-end speaker detected by the first near-end speaker's position detecting unit **137.**

The operation to be performed by the echo suppressing means **13** which includes a second equalizing unit 138, and which is foming part of the voice communication apparatus will be then described with reference to the flowchart of FIG 20. As shown in FIG **20,** the operation is performed as the second equalization processing between the step **S440** and the step **S408** (in step **S420).** The operation to be performed in the steps **S401** to **S440** and in the step **S408** and subsequent steps is the same as the operation to be performed by the echo suppressing means **13** of the voice communication apparatus according to the second embodiment of the present invention. Therefore, the operation to be performed in the steps **S401** to **S440** and in the step **S408** and subsequent steps will not be described hereinafter.

The operation to be performed as the second equalization (in step **S420)** will be described hereinafter with reference to the flowchart of FIG **11.**

The position of the near-end speaker with respect to the voice inputting means **12** is calculated as a first near-end speaker's position on the basis of the interval between peaks of the white cross-correlation function between the first near-end signal converted by the first near-end voice converting unit **121** and the second near-end signal converted by the second near-end voice converting unit **122** (in step **S421).** The operation in the step **S421** is performed by the first near-end speaker's position detecting unit **137.**

The equalization characteristic is calculated from the equalization characteristic stored in the memory unit **231** by the second equalizing unit 138 on the basis of both the current parameter value detected by the current value detecting unit **131** and the first near-end speaker's position detected by the first near-end speaker's position detecting unit **137** (in step **S422).** The suppressed near-end signal is equalized on the basis of the calculated equalization characteristic (in step **S423).** The operation in the steps **S422** and **S423** is performed by the second equalizing unit **138.**

From the above detail description, it will be understood that the above mentioned voice communication apparatus according to the present invention can maintain the quality of the near-end voice signal to be transmitted to the far-end speaker even if the near-end speaker is being spaced apart from the first reference point by reason that the echo suppressing means 13 further includes a first near-end speaker's position detecting unit 137 and a second equalizing unit 138.

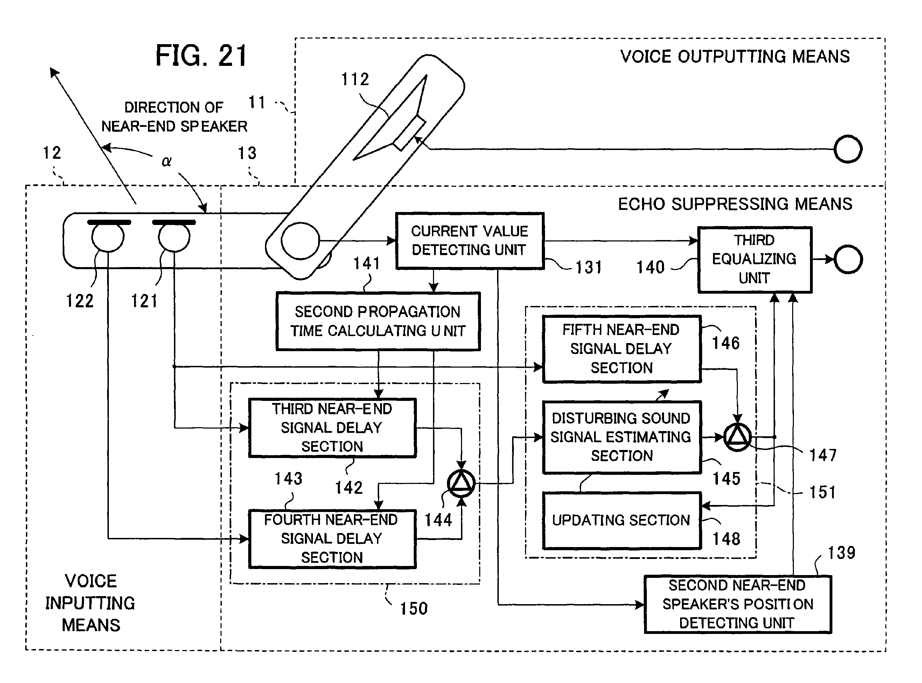

As shown in FIG 21, the echo suppressing means 13 of the voice communication apparatus according to the second embodiment of the present invention may further include a second near-end speaker's position detecting unit 139 for detecting, as a second near-end speaker's position, a current position of the near-end speaker with respect to the far-end signal converting unit 112 on the basis of the current parameter value detected by the current value detecting unit 131, and a third equalizing unit 140 for equalizing a frequency spectrum of the first suppressed near-end signal outputted by the first suppressed near-end signal outputting unit 130 with respect to the current parameter value detected by the current value detecting unit 131 and the second near-end speaker's position detected by the second near-end speaker's position detecting unit 139.

In this case, the equalization characteristic is determined on the basis of the current parameter value detected by the current value detecting unit 131 with the assumption that the near-end speaker occupies the second reference point in face-to-face relationship with the far-end signal converting unit 112.

As has been described in the first embodiment, the operation is perfomed by the second near-end speaker's position detecting unit 139 with the assumption that the near-end speaker occupies the second reference point in face-to-face relationship with the far-end signal converting unit 112.

From the above detail description, it will be understood that the above mentioned voice communication apparatus according to the present invention can maintain the quality of the near-end signal to be transmitted to the far-end speaker on the basis of the reference frequency spectrum of the near-end voice even if the near-end speaker is being spaced apart from the second reference point by reason that the echo suppressing means 13 includes a second near-end speaker's position detecting unit 139 and a third equalizing unit 140. The second near-end speaker's position detecting unit 139 can be simple in construction in comparison with the first near-end speaker's position detecting unit 137.

In each of the first and second embodiments, the delay time to be set in the near-end signal delay section by the first or second propagation time calculating unit is calculated on the basis of the relative location of either the first near-end voice converting unit or the second near-end voice converting unit with respect to the far-end signal converting unit. However, the delay time may be calculated on the basis of the cross-correlation between the impulse response signal of the first near-end voice converting unit and the impulse response signal of the second near-end voice converting unit under the condtion that the impulse signal is outputted by the far-end signal converting unit.

Each of the first to third equalizing units may be constituted by a conventionally known finite impulse response (FIR) filter. Additionally, each of the first to third equalizing units may be constituted by a conventionally known infinite impulse response (IIR) filter. However, the hardware construction of each of the first to third equalizing units will not described in detail hereinafter.

The equalizing unit constituted by the FIR filter can precisely set the equalization characteristic. On the other hand, the equalizing unit constituted by the IIR filter can reduce the volume of the equalizing operation.

The equalization characteristic is calculated in each of specific frequency ranges by conventionally known filter bank.

In this embodiment, the operation is performed in time domain by the voice communication apparatus by the echo suppressing means of the voice communication apparatus according to the first and second embodiment of the present invention. However, the operation may be performed in frequency domain by the echo suppressing means of the voice communication apparatus according to the first and second embodiment of the present invention. If the operation is performed in the frequency domain, the near-end signal to be transmitted to the far-end speaker is delayed with the time delay equal to the frame length by reason that the near-end signal is divided a plurarity of sequential frames each having a time period, the near-end signal.

It is preferable to determine whether to perform in time domain or in frequency domain on the basis of the application of the voice communication apparatus according to the present invention.

Additionally, the voice outputting means includes a speaker unit as a far-end signal converting unit in the voice communication apparatus according to the present invention. However, the voice outputting means may be include a plurality of speaker units correctively equivalent to the far-end signal converting unit.

(third embodiment)

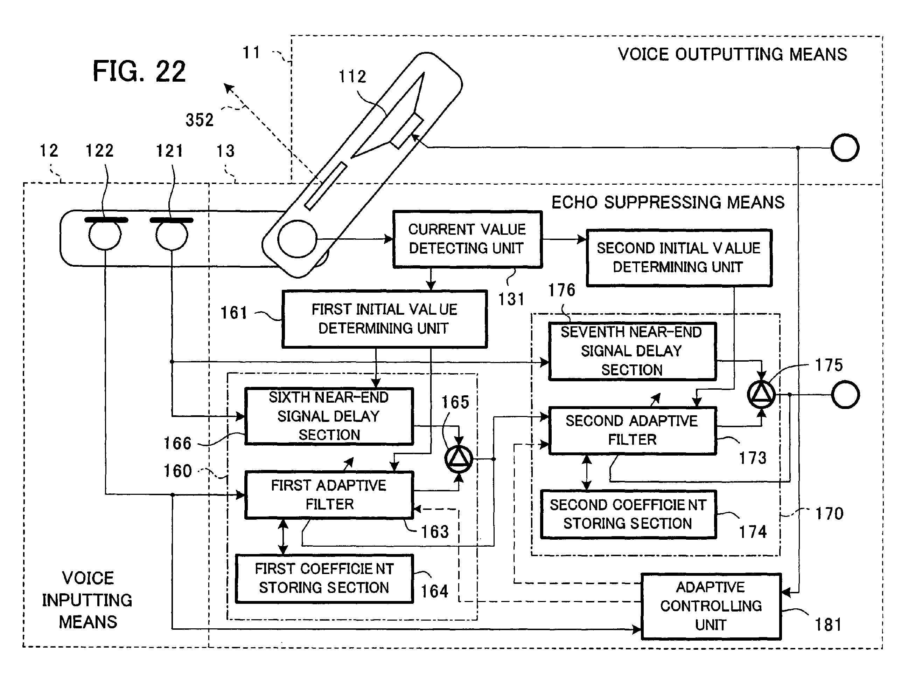

The constitution of the third embodiment of the voice communication apparatus according to the present invention will be described hereinafter with reference to FIG 22.

The constitutional elements of the voice communication apparatus according to the third embodiment are substantially the same as those of the voice communication apparatus according to each of the first and second embodiments except for the constitutional elements appearing in the following description. Therefore, the constitutional elements of the voice communication apparatus according to the third embodiment the same as those of the voice communication apparatus according to each of the first and second embodiments will not be described but bear the same reference numerals and legends as those of the voice communication apparatus according to each of the first and second embodiments. The voice communication apparatus according to the third embedment of the present invention comprises voice outputting means **11** for outputting a far-end voice indicative of a far-end signal, voice inputting means **12** for inputting a near-end voice, and echo suppressing means **13** for suppressing an echo generated by the voice inputting means **12** from the far-end voice outputted by the voice outputting means **11.**

The voice outputting means **11** includes a far-end signal converting unit **112** spaced apart from the reference point with a predetermined first distance, and adapted to convert the far-end signal to the far-end voice.

The voice inputting means **12** includes a first near-end voice converting unit **121** spaced apart from the reference point with a predetermined second distance, and adapted to convert the inputted near-end voice to a first near-end signal, and a second near-end voice converting unit **122** disposed at a predetermined position in spaced relationship with the first near-end voice converting unit **121,** and adapted to convert the inputted near-end voice to a second near-end signal.

The echo suppressing means **13** includes an echo component detecting unit 160 for detecting, as an echo component signal, a component other than a real near-end voice to be specified as a cross-component in each of the first and second near-end signals on the basis of the first and second near-end signals respectively converted by the first and second near-end voice converting units **121** and **122,** and a third suppressed near-end signal outputting unit **170** for outputting a third suppressed near-end signal by subtracting the echo component signal detected by the echo component detecting unit **160** from either the first near-end signal converted by the first near-end voice converting unit **121** or the second near-end signal converted by the second near-end voice converting unit **122.** Here, the term "echo component signal" is intended to indicate a signal indicative of the remaining component other than the near-end voice component. More specifically, the echo component signal includes not only an echo component to be narrowly specified in near-end signal, but also a noise such as for example a background noise.

The voice communication apparatus according to the third embodiment of the present invention is exemplified by a mobile phone which is shown in FIG. **3** as comprising a housing having two complementary sections **32** and **33,** and a hinge **31** intervening between the two complementary sections **32** and **33** to allow the complementary sections **32** and 33 to be angularly displaced with each other. As shown in FIG **22,** the housing may be provided with a display section **341.** Here, the reference number **352** is shown as a direction of the near-end speaker with respect to the voice communication apparatus.

The echo component detecting unit **160** includes a real near-end voice estimating section for estimating, as a real near-end signal, a real near-end voice to be specified as a cross-component in each of the first and second near-end signals respectively converted by the first and second near-end voice converting units **121** and **122,** a sixth sixth near-end signal delay section **166** for delaying either the first near-end signal converted by the first near-end voice converting unit **121** or the second near-end signal converted by the second near-end voice converting unit **122** with a delay time required to perform the estimation of the real near-end signal by the real near-end voice estimating section, and an echo component signal outputting section **165** for outputting, as a first echo component signal, a signal indicative of the signal difference between the near-end signal delayed as a sixth delayed near-end signal by the sixth near-end signal delay section **166** and the real near-end signal estimated by the real near-end voice estimating section. The real near-end voice estimating section has a first adaptive filter **163** for executing an adaptive signal processing of either the first near-end signal converted by the first near-end voice converting unit **121** or the second near-end signal converted by the second near-end voice converting unit **122,** and a first coefficient storing section **164** for storing information indicative of first coefficients as a parameter of the adaptive signal processing to be executed by the first adaptive filter **163.**

The third suppressed near-end signal outputting unit **170** includes an echo component estimating section for estimating, as a second echo component signal, a signal to be specified as a component other than the real near-end voice in either the first near-end signal converted by the first near-end voice converting unit **121** or the second near-end signal converted by the second near-end voice converting unit **122** on the basis of the echo component signal outputted by the echo component signal outputting section **165,** a seventh near-end signal delay section **176** for delaying either the first near-end signal converted by the first near-end voice converting unit **121** or the second near-end signal converted by the second near-end voice converting unit **122** with a delay time required to performing the estimation of the echo component signal by the echo component estimating section, and a third outputting section **175** for outputting a third suppressed near-end signal by subtracting the second echo component signal estimated by the echo component estimating section from the near-end signal delayed as a seventh delayed near-end signal by the seventh near-end signal delay section **176.**

The echo component estimating section is constituted by two different elements including a second adaptive filter **173** for adaptively processing the echo component signal outputted by the echo component signal outputting section **165,** and a second coefficient storing section **174** for storing information indicative of second filter coefficients to be received as a parameter of the adaptive signal processing by the second adaptive filter **173.** The second adaptive filter **173** is operative to perform the adaptive filterring operation to minimize the absolute value of the signal difference outputted by the third outputting section **175.**

The echo suppressing means **13** includes a current value detecting unit **131** for detecting a current parameter value indicative of a current relative location of either the first near-end voice converting unit **121** or the second near-end voice converting unit **122** with respect to the far-end signal converting unit **112,** a first initial value determining unit **161** for determining, as a parameter of the adaptive signal processing, initial filter coefficients of the first adaptive filter **163** in response to the current parameter value detected by the current value detecting unit **131,** and a second initial value determining unit **171** for determining, as a parameter of the adaptive signal processing, initial filter coefficients of the second adaptive filter **173** in response to the current parameter value detected by the current value detecting unit **131.**

The echo suppressing means **13** includes an adaptive controlling unit **181** for issuing an instruction to the first adaptive filter **163** to update the first filter coefficients when the judgment is made that the near-end signal predetermined as one of the first and second near-end signals exceeds in amplitude the far-end signal, and issuing an instruction to the second adaptive filter **173** to update the second filter coefficients when the judgment is made that the far-end signal exceeds in amplitude one of the first and second near-end signals.

The flows of the signals respectively outputted by the constitutional elements of the voice communication apparatus according to the present invention will be then described hereinafter. The signal is outputted to the first adaptive filter **163** from the second near-end voice converting unit **122.** Here, the first adaptive filter **163** is electrically connected to the first coefficient storing section **164.** The signal is outputted to the echo component signal outputting section 165 from the sixth near-end signal delay section **166,** while the signal is outputted to the echo component signal outputting section **165** from the first adaptive filter **163.**

The signal is outputted to each of the first and second adaptive filters **163** and **173** from the echo component signal outputting section **165.** Here, the second adaptive filter **173** is electrically connected to the second coefficient storing section **174.** The filter coefficient information is received from the second coefficient storing section **174** by the second adaptive filter **173.** The signal is outputted to the third outputting section 175 from the seventh near-end signal delay section **176,** while the signal is outputted to the third outputting section **175** from the second adaptive filter **173.**

The signal is outputted to the second adaptive filter **173** from the third outputting section **175,** and transmitted as an echo suppressed signal to the far-end speaker from the third outputting section **175.** The hinge **31** is connected as housing state detecting means to the current value detecting unit **131,** while the current parameter value is detected as a parameter related to the current angle between the first and second complementary sections **32** and **33** by the current value detecting unit **131.**

The signal is outputted to the first adaptive filter **163** from the first initial value determining unit **161,** while the signal is outputted to the second adaptive filter **173** from the second initial value determining unit **171.** The far-end signal is received by the adaptive controlling unit **181** from the far-end signal converting unit **112,** while the second near-end signal is received by the adaptive controlling unit **181** from the second near-end voice converting unit **122.** The signal is outputted to the first adaptive filter **163** from the adaptive controlling unit **181,** while the signal is outputted to the second adaptive filter **173** from the adaptive controlling unit **181.**

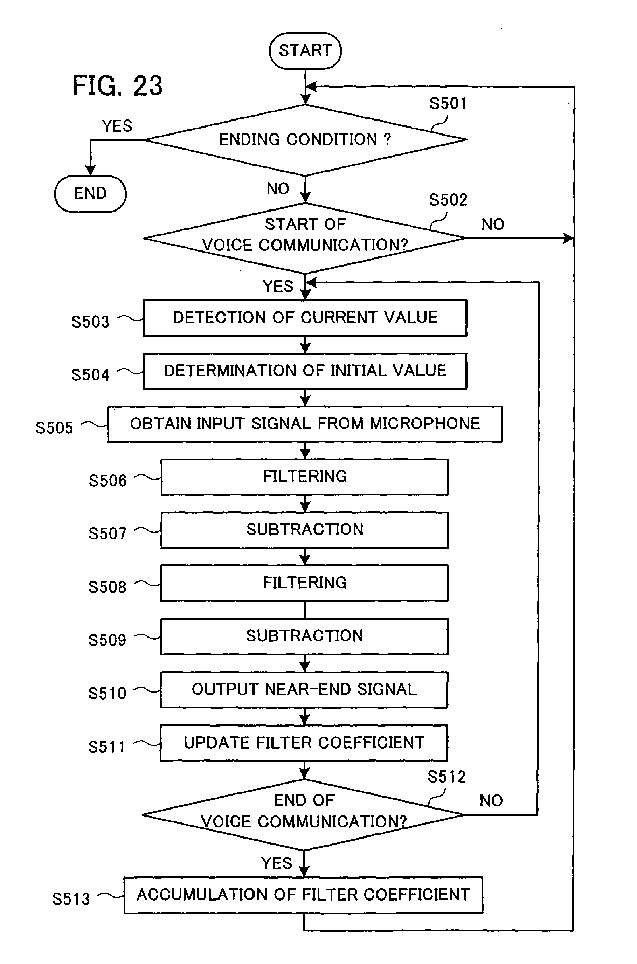

The operation of the voice communication apparatus thus constructed as previously mentioned will be described hereinafter with reference to FIG **23.** The judgment is firstly made by the echo suppressing means **13** on whether or not voice communication ending conditions are fulfilled in the voice communication apparatus, for example, on whether or not the voice communication apparatus is turned off (in step **S501**). When the judgment is made in the step **S501** that the voice communication ending conditions are fulfilled in the voice communication apparatus, the echo suppressing means **13** is operated to stop the operation of suppressing the echo component of the near-end signal. When, on the other hand, judgment is made in the step **S501** that the voice communication ending conditions are not fulfilled in the voice communication apparatus, the step **S501** proceeds to the step **S502.**

When the judgment is made in the step **S501** that the voice communication ending conditions are not fulfilled in the voice communication apparatus, the judgment is made by the echo suppressing means **13** on whether or not the voice communication is started between the far-end speaker and the near-end speaker by judging whether or not the signal level of the near-end signal is equal to or smaller than a predetermine threshold level (in step **S502**). When the judgment is made in the step **S502** that the voice communication is started between the far-end speaker and the near-end speaker on the basis of the signal level of the near-end signal, the step **S502** proceeds to the step **S503.** When, on the other hand, the judgment is made in the step **S502** that the voice communication is not started between the far-end speaker and the near-end speaker on the basis of the signal level of the near-end signal, the step **S502** proceeds to the step **S501.**

When the judgment is made in the step **S502** that the voice communication is started between the far-end speaker and the near-end speaker, the current parameter value is detected by the current value detecting unit **131** as a current state of the housing. The current angle between the first and second complementary sections **32** and **33** is calculated on the basis of the current parameter value detected by the current value detecting unit **131.** Here, the current value detecting unit **131** may be realized by a rotary encoder, variable resister, or other converter for converting the current angle of the hinge **31** to an electric signal. Additionally, the parameter value indicative of the relative location of either the first near-end voice converting unit **121** or the second near-end voice converting unit **122** with respect to the far-end signal converting unit **112** may be detected in a discontinuous manner by the current value detecting unit **131.** For example, the current value detecting unit **131** may be replaced by a detecting element for detecting whether the housing is in an open state or in a closed state.

The initial values of the first and second filter coefficients to be respectively outputted to the first and second adaptive filters **163** and **173** are respectively determined by the first and second initial value determining units **161** and **171** on the basis of the current parameter value detected by the current value detecting unit **131** (in step **S504**).

More specifically, the first initial value determining unit **161** is operated to output a signal related to the current angle of the housing (hereinafter referred to as "angle signal") to the first adaptive filter **163,** while the first adaptive filter **163** is operated to receive the filter coefficient from the first coefficient storing section **164** in response to the angle signal received from the first initial value determining unit **161.** Here, the filter coefficients respectively related to the predetermined angles may be stored in advance in the first coefficient storing section **164,** while the first adaptive filter **163** may be operated to select one filter coefficient from among the filter coefficients stored in the first coefficient storing section **164** on the basis of the angle signal received from the first initial value determining unit **161** and the interpolation method or other conventional methods.

On the other hand, the second initial value determining unit **171** is operated to output an angle signal related to the current angle of the housing to the second adaptive filter **173,** while the second adaptive filter **173** is operated to receive the filter coefficient from the second coefficient storing section **174** in response to the angle signal received from the second initial value determining unit **171.** Here, the filter coefficients respectively related to the predetermined angles may be stored in advance in the second coefficient storing section **174,** while the second adaptive filter **173** may be operated to select one filter coefficient from among the filter coefficients stored in the second coefficient storing section **174** on the basis of the angle signal received from the second initial value determining unit **171** and the interpolation method or other conventional methods.

When the initial values of the first and second filter coefficients are respectively determined by the first and second initial value determining units **161** and **171** in the step **S504,** the near-end sound is received by each of the first and second near-end voice converting units **121** and **122,** and converted to the first and second near-end signals (in step **S505).** Each of the first and second near-end signals converted by the first and second near-end voice converting units **121** and **122** is converted to a digital signal by an analogue-to-digital converter (not shown). Here, each of the first and second near-end signals may be processed as an analogue signal in the step **S506** and subsequent steps.

In general, the voice communication apparatus is partially constituted by a microcomputer or a digital signal processor (DSP) to execute an echo-suppressing program to perform the operation in the step **S506** and subsequent steps.

The first and second near-end signals digitized by the A/D converter are processed in time domain in following steps. Each of the first and second near-end signals is discretely processed as a time domain analysis at a sampling rate of the A/D converter. If each of the first and second near-end signals digitized by the A/D converter are processed in frequency domain, each of the first and second near-end signals digitized by the A/D converter is divided into frames having respective periods. Each of the first and second near-end signals divided into the frames is sequentially processed as a frequency domain analysis. The frequency domain analysis can shorten processing time of echo suppression in comparison with the time domain analysis. On the other hand, the near-end signal to be transmitted to the far-end speaker is delayed with the delay time equal to the period of each of the frames if the near-end signal to be transmitted to the far-end speaker is processed in the frequency domain.

The first near-end signal digitized in the step **S505** is delayed with a predetermined delay time by the sixth near-end signal delay section **166,** while the second near-end signal digitized in the step **S505** is adaptively processed (in step **5506).** It is preferable that the predetermined delay time of the sixth near-end signal delay section **166** is equal to the coefficient length of the first adaptive filter **163.** More specifically, the predetermined delay time of the sixth near-end signal delay section 166 is roughly equal to half of a tap length of the first adaptive filter **163.**

It is preferable that the first near-end signal digitized in the step **S505** may be delayed by a buffer memory with the delay time equal to the integral multiple of the sampling rate of the A/D converter **233.** The convolution of the first filter coefficient to the second near-end signal digitized in the step **S505** is performed by the first adaptive filter **163.**

Each of the first near-end signal delayed in the step **S506** and the second near-end signal adaptively processed by the first adaptive filter **163** in the step **S506** is then received by the echo component signal outputting section 165. The signal difference between the first near-end signal delayed in the step **S506** and the second near-end signal adaptively processed by the first adaptive filter **163** in the step **S506** is then calculated by the echo component signal outputting section **165** (in step **S507).** The signal indicative of the signal difference calculated by the echo component signal outputting section **165** in the step **S507** is fed back to the first adaptive filter 163. The first adaptive filter 163 is then operated to adaptively process the second near-end signal to minimize the absolute value of the signal difference between the first near-end signal delayed in the step **S506** and the second near-end signal adaptively processed by the first adaptive filter **163** in the step **S506.**

The first near-end signal digitized in the step **S505** is delayed with a predetermined delay time by the seventh near-end signal delay section **176,** while the signal outputted by the echo component signal outputting section **165** is adaptively processed by the second adaptive filter **173** (in step **S508).** It is preferable that the predetermined delay time of the seventh near-end signal delay section **176** is equal to the coefficient length of the second adaptive filter **173.** More specifically, the predetermined delay time of the seventh near-end signal delay section **176** is roughly equal to half of a tap length of the second adaptive filter **173.**

It is preferable that the first near-end signal digitized in the step S506 is delayed by a buffer memory with the delay time equal to the integral multiple of the sampling rate of the A/D converter **233.** The convolution of the first filter coefficient to the second near-end signal digitized in the step **S505** is performed by the first adaptive filter **173.**

Each of the first near-end signal delayed in the step **S508** and the signal adaptively processed by the second adaptive filter **173** in the step **S508** is then received by the third outputting section **175.** The signal difference between the first near-end signal delayed in the step **S508** and the second near-end signal adaptively processed by the second adaptive filter **173** in the step **S508** is then calculated by the third outputting section **175** (in step **S509).** The signal difference calculated by the third outputting section **175** in the step **S509** is fed back to the second adaptive filter **173.** The first adaptive filter **173** is then operated to adaptively process the second near-end signal to minimize the absolute value of the signal difference calculated in the step **S509.**

The signal produced in the step **S509** is then outputted as the suppressed near-end signal to the far-end speaker (in step **S510).**

Each of the first and second filter coefficients of the first and second adaptive filters **163** and **173** is updated after the judgment is made by the adaptive controlling unit **181** on whether or not to update each of the first and second filter coefficients of the first and second adaptive filters **163** and **173** (in step **S511**). When the answer in the step **511** is in the affirmative, each of the first and second filter coefficients of the first and second adaptive filters **163** and **173** is updated in the step **S511**. When, on the other hand, the answer in the step **511** is in the negative, each of the first and second filter coefficients of the first and second adaptive filters **163** and **173** is not updated in the step **S511**.

The following description will be then directed to, as an example, a judging method of the adaptive controlling unit **181**. When the judgment is made that the power value of the near-end signal exceeds a first threshold level, and that the cross-correlation between the far-end signal and the near-end sigal outputted by the second near-end voice converting unit **122** exceeds a predetermined threshold level, the judgment is made that the far-end signal exceeds the near-end signal. When, on the other hand, the judgment is made that the power value of the near-end signal does not exceed a second threshold level, and that the power value of the near-end sigal outputted by the second near-end voice converting unit **122** exceeds a third threshold level, the judgment is made that the near-end voice component of the near-end signal exceeds the far-end signal. Here, the judgment may be made by the adaptive controlling unit **181** on whether or not to update each of the first and second filter coefficients of the first and second adaptive filters **163** and **173** by judging whether or not the maximum value of the white cross-correlation between the far-end signal and the near-end sigal outputted by the second near-end voice converting unit **122** exceeds a predetermined threshold level.

Additionally, the judgment may be made that the far-end signal exceeds the near-end signal when the judgment is made that the power value of the near-end signal outputted by the second near-end voice converting unit **122** exceeds the first threshold level, and that the power value of the far-end signal exceeds the second threshold level. On the other hand, the judgment may be made that the near-end signal exceeds the far-end signal when the judgment is made that the power value of the far-end signal does not exceed the third threshold level, and that the power value of the near-end signal outputted by the second near-end voice converting unit **122** exceeds the fourth threshold level.

As will be seen from the above mentioned operation of the adaptive controlling unit **181,** the first filter coefficient of the first adaptive filter **163** can be updated when the judgment is made that the near-end signal exceeds the far-end signal. This leads to the fact that the near-end voice component of the near-end signal is estimated by the first adaptive filter **163** on the basis of the updated first filter coefficient. The near-end voice component of the near-end signal is then suppressed in response to the near-end voice component estimated by the first adaptive filter **163** by the echo component signal outputting section **165**. Accordingly, the signal is outputted as an estimated echo component signal by the echo component signal outputting section **165**.

On the other hand, the second filter coefficient of the second adaptive filter **173** can be updated by the adaptive controlling unit **181** when the judgment is made that the far-end signal exceeds the near-end signal. This leads to the fact that the echo component of the near-end signal is estimated by the second adaptive filter **173** on the basis of the updated second filter coefficient. The echo component of the near-end signal is then suppressed in response to the echo component estimated by the second adaptive filter **173** by the third outputting section **175**. Accordingly, the signal is outputted as a near-end sound component signal to be transmitted to the far-end speaker by the third outputting section **175**. Here, each of the first filter coefficient of the first adaptive filter **163** and the second filter coefficient of the second adaptive filter **173** may be updated by the adaptive controlling unit **181** on the basis of the conventionally known method such as for example the learning identification method and the first recursive least squares (FRLS) method.

The judgment is then made on whether or not the voice communication is completed between the near-end speaker and the far-end speaker (in step **S512)** after each of the first and second filter coefficients of the first and second adaptive filters 163 and 173 is updated by the adaptive controlling unit **181** in the step **S511**. When the judgment is made that the voice communication is completed between the near-end speaker and the far-end speaker, the step **S512** proceeds to the step **S513**. When, on the other hand, the judgment is made that the voice communication is not completed between the near-end speaker and the far-end speaker, the step **S512** proceeds to the step **S503**. The operation is repeatedly performed in the steps **S503** to **S512**. The steps **S503** and **S504** are skipped in the repeated operation.

When the judgment is made that the voice communication is completed between the near-end speaker and the far-end speaker, the first filter coefficient of the first adaptive filter 163 is stored in the first coefficient storing section **164** in association with the current angle related to the current parameter value detected by the current value detecting unit **131.** On the other hand, the second filter coefficient of the second adaptive filter **173** is stored in the second coefficient storing section **174** in association with the current angle related to the current parameter value detected by the current value detecting unit **131.**

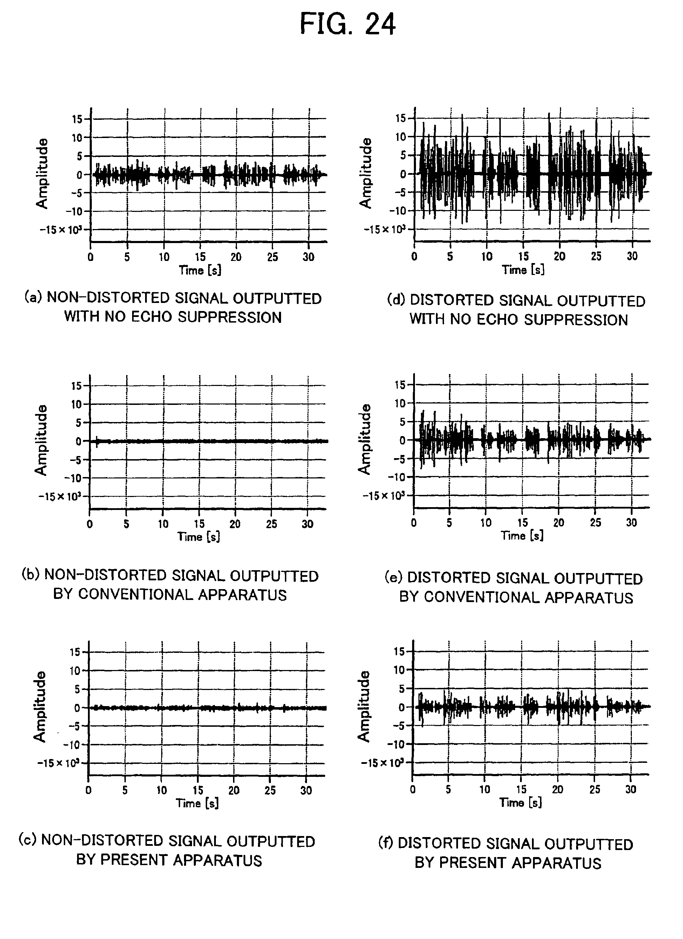

The effects of the voice communication apparatus according to the third embodiment of the present invention will be described hereinafter with reference to FIGS. **24** (a) to **24(f).** Here, each of FIGS. **24(a)** to **24(c)** is a graph showing the near-end signal outputted as a signal to be transmitted to the far-end speaker in response to the far-end voice converted with no distortion, or linearly converted from the far-end signal by the far-end signal converting unit **112.**

FIG **24(a)** is a graph showing the near-end signal outputted with no echo suppression as a signal to be transmitted to the far-end speaker in response to the far-end voice converted with no distortion, or linearly converted from the far-end signal. In this case, the far-end voice received from the far-end signal converting unit **112** is superimposed as an echo component on the near-end sound to be converted by each of the first and second near-end voice converting units **121** and **122.** The received far-end voice and the near-end sound are collectively converted to the near-end signal to be transmitted to the far-end speaker.

As shown in FIG **24(a),** the quality of the near-end signal to be transmitted to the far-end speaker is deteriorated by the echo component under the condtion that the echo component of the near-end signal is not negligible small in comparison with the near-end voice component of the near-end signal. FIG **24(b)** is a graph showing the near-end signal outputted as a signal to be transmitted to the far-end speaker under the condtion that the echo component of the near-end signal is suppressed by the conventional echo canceller on the basis of the conventional learning identification method. As will be seen from FIG. **24(b),** the echo component of the near-end signal can be sufficiently suppressed by the conventional echo canceller.

FIG **24(c)** is a graph showing the near-end signal outputted as a signal to be transmitted to the far-end speaker under the condtion that the echo component of the near-end signal is suppressed by the voice communication apparatus according to the third embodiment of the present invention. As will be seen from FIG **24(c),** the echo component of the near-end signal can be sufficiently suppressed by the voice communication apparatus according to the third embodiment of the present invention.

Each of FIGS. **24(d)** to **24(f)** is a graph showing the near-end signal outputted as a signal to be transmitted to the far-end speaker in response to the far-end voice converted with distortion, or nonlinearly converted from the far-end signal. FIG. **24**(d) is a graph showing the near-end signal outputted with no echo suppression as a signal to be transmitted to the far-end speaker. As will be seen from FIG. **24(d),** the near-end signal is outputted with the relatively large echo component.

FIG **24(e)** is a graph showing the near-end signal outputted with echo suppression as a signal to be transmitted to the far-end speaker under the condtion that the echo component of the near-end signal is suppressed by the conventional echo canceller. As will be seen from FIG. **24(e),** the echo component can be partially suppressed in the near-end signal to be transmtted to the far-end speaker by the conventional echo canceller by reason that the conventional echo canceller is adapted to linearly suppress the echo component. When, however, the far-end signal is converted with distortion, or nonlinearly converted by the far-end signal convernting unit **112** to a sound to be received by the near-end speaker, the echo component of the near-end signal to be transmitted to the far-end speaker cannot accurately estimated by the conventional echo canceller. This means that the echo component of the near-end signal to be transmitted to the far-end speaker cannot be sufficiently surressed by the conventional echo canceller.

FIG **24(f)** is a graph showing the near-end signal outputted as a signal to be transmitted to the far-end speaker under the condtion that the echo component of the near-end signal is suppressed by the voice communication apparatus according to the third embodiment of the present invention. As will be seen from FIG. **24(f),** the voice communication apparatus according to the third embodiment of the present invention cannot perfectly suppress the echo component of the near-end signal to be transmtted to the far-end speaker, but more markedly suppress the echo component of the near-end signal to be transmtted to the far-end speaker in comparison with the conventional echo canceller.

In recent years, there have been proposed a wide variety of downsized mobile phones, and a downsized speaker unit to be built in each of the mobile phones as a voice outputting means **11.** Further, the far-end signal tends to be converted with distortion or nonlinearly converted by the downsized speaker unit. The echo component indicative of the distorted far-end sound cannot linearly suppressed by the conventional echo canceller. However, the echo component indicative of the distorted far-end sound can more reliably suppressed by the voice communication apparatus according to the third embodiment of the present inveintion in comparison with the conventional echo canceller.

From the above detail description, it will be understood that the voice communication apparatus according to the third embodiment of the present invention can maintain its echo suppressing characteristic without being affected by the varied relative location of the near-end voice converting unit with respect to the far-end signal converting unit, and maintain the quality of the near-end signal to be transmitted to the far-end speaker by reason that the first adaptive filter is opearive to detect the first echo component related to the current relative location of the near-end voice converting unit with respect to the far-end signal converting unit, the second adaptive filter is opearive to estimate the second echo component of the near-end signal, and the third outputting section is operative to suppress the echo component of the near-end signal.

The voice communication apparatus according to the third embodiment of the present invention can maintain its echo suppressing characteristic without being affected by the varied relative location of the near-end voice converting unit with respect to the far-end signal converting unit, and maintain the quality of the near-end signal to be transmitted to the far-end speaker by reason that the first initial value detemining unit is operative to determine, as a parameter of the adaptive signal processing, initial filter coefficients of the first adaptive filter in response to the current parameter value detected by the current value detecting unit, and the second initial value determining unit is operative to determine, as a parameter of the adaptive signal processing, initial filter coefficients of the second adaptive filter in response to the current parameter value detected by the current value detecting unit.

The voice communication apparatus according to the third embodiment of the present invention can maintain its echo suppressing characteristic by minimizing the second suppressed near-end signal on the basis of the least squares estimation to converge the disturbing sound signal estimating characteristic of the disturbing sound signal estimating section to the optimum disturbing sound signal estimating characteristic in a short period of time, and maintain the quality of the near-end signal to be transmitted to the far-end speaker by reason that the instruction to the first and second adaptive filters to update the first and second filter coefficients is issued by the adaptive controlling unit on the basis of the near-end signal and the far-end signal.

In each of the first to third embodiments of the voice communication apparatus according to the present invention, the position occupied by the first near-end voice converting unit **121** is close to the far-end signal converting unit **112** in comparison with the position occupied by the second near-end voice converting unit **122**. However, the position occupied by the second near-end voice converting unit **122** may be close to the far-end signal converting unit **112** in comparison with the position occupied by the first near-end voice converting unit **121.**

## INDUSTRIAL APPLICABILITY OF THE PRESENT INVENTION

In accordance with the present invention, there is provided a voice communication apparatus which can maintain its echo suppressing characteristic to suppress the echo component of the near-end signal to be transmitted to the far-end speaker without being affected by the varied relative location of the microphone unit with respect to the speaker unit, and maintain the quality of the near-end signal to be transmitted to the far-end speaker.

## Claims

1. A voice communication apparatus, comprising:

   a housing having a reference point;
   voice outputting means for outputting a far-end voice indicative of a far-end signal;
   voice inputting means for inputting a near-end voice; and
   echo suppressing means for suppressing an echo generated by said voice inputting means from said far-end voice outputted by said voice outputting means, wherein
   said voice outputting means includes a far-end signal converting unit spaced apart from said reference point with a predetermined first distance, and adapted to convert said far-end signal to said far-end voice,
   said voice inputting means includes a first near-end voice converting unit spaced apart from said reference point with a predetermined second distance, and adapted to convert said inputted near-end voice to a first near-end signal, and a second near-end voice converting unit disposed at a predetermined position in spaced relationship with said first near-end voice converting unit, and adapted to convert said inputted near-end voice to a second near-end signal,
   said echo suppressing means includes a current value detecting unit for detecting a current parameter value indicative of a current relative location of either said first near-end voice converting unit or said second near-end voice converting unit with respect to said far-end signal converting unit, a first propagation time calculating unit for calculating a first propagation time of said far-end voice converted by said far-end signal converting unit to a distance between said far-end signal converting unit and said first near-end voice converting unit on the basis of a first function to be provided with said parameter value defined as its independent variable and said first propagation time defined as its dependent variable, and a second propagation time of said far-end voice converted by said far-end signal converting unit to a distance between said far-end signal converting unit and said second near-end voice converting unit on the basis of a second function to be provided with said parameter value defined as its independent variable and said second propagation time defined as its dependent variable, and a first suppressed near-end signal outputting unit for outputting a first suppressed near-end signal after suppressing said echo on the basis of its echo suppressing characteristic updated in response to said first and second propagation time calculated by said first propagation time calculating unit.

2. A voice communication apparatus as set forth in claim 1, in which said first suppressed near-end signal outputting unit includes a first near-end signal delay section for delaying said first near-end signal converted by said first near-end voice converting unit on the basis of said first propagation time calculated by said first propagation time calculating unit, a second near-end signal delay section for delaying said second near-end signal converted by said second near-end voice converting unit on the basis of said second propagation time calculated by said first propagation time calculating unit, and a first outputting section for outputting a signal indicative of the signal difference between said first near-end signal delayed by said first near-end signal delay section and said second near-end signal delayed by said second near-end signal delay section.

3. A voice communication apparatus as set forth in claim 1, in which
said echo suppressing means includes a first equalizing unit for equalizing a frequency spectrum of said first suppressed near-end signal outputted by said first suppressed near-end signal outputting unit with respect to said current parameter value detected by said current value detecting unit.

4. A voice communication apparatus as set forth in claim 1, in which
said echo suppressing means includes a first near-end speaker's position detecting unit for detecting, as a first near-end speaker's position, a position of said near-end speaker with respect to either said first near-end voice converting unit or said second near-end voice converting unit on the basis of the cross-correlation function between said first near-end signal converted by said first near-end voice converting unit and said second near-end signal converted by said second near-end voice converting unit, and a second equalizing unit for equalizing a frequency spectrum of said first suppressed near-end signal outputted by said first suppressed near-end signal outputting unit with respect to said current parameter value detected by said current value detecting unit and said position of said near-end speaker detected by said first near-end speaker's position detecting unit.

5. A voice communication apparatus as set forth in claim 1, in which
said echo suppressing means includes a second near-end speaker's position detecting unit for detecting, as a second near-end speaker's position, a current position of said near-end speaker with respect to said far-end signal converting unit on the basis of said current parameter value detected by said current value detecting unit, and a third equalizing unit for equalizing a frequency spectrum of said first suppressed near-end signal outputted by said first suppressed near-end signal outputting unit with respect to said current parameter value detected by said current value detecting unit and said second near-end speaker's position detected by said second near-end speaker's position detecting unit.

6. A voice communication apparatus, comprising:

a housing having a reference point;
voice outputting means for outputting a far-end voice indicative of a far-end signal;
voice inputting means for inputting a near-end voice; and
echo suppressing means for suppressing an echo generated by said voice inputting means from said far-end voice outputted by said voice outputting means, wherein
said voice outputting means includes a far-end signal converting unit spaced apart from said reference point with a predetermined first distance, and adapted to convert said far-end signal to said far-end voice,
said voice inputting means includes a first near-end voice converting unit spaced apart from said reference point with a predetermined second distance, and adapted to convert said inputted near-end voice to a first near-end signal, and a second near-end voice converting unit disposed at a predetermined position in spaced relationship with said first near-end voice converting unit, and adapted to convert said inputted near-end voice to a second near-end signal,
said echo suppressing means includes a current value detecting unit for detecting a current parameter value indicative of a current relative location of either said first near-end voice converting unit or said second near-end voice converting unit with respect to said far-end signal converting unit, a second propagation time calculating unit for calculating a third propagation time of said near-end voice to be received by said first near-end voice converting unit with respect to said current parameter value detected by said current value detecting unit on the basis of a third function to be provided with said parameter value defined as its independent variable and said third propagation time defined as its dependent variable, and a fourth propagation time of said near-end voice to be received by said second near-end voice converting unit with respect to said current parameter value detected by said current value detecting unit on the basis of a fourth function to be provided with said parameter value defined as its independent variable and said fourth propagation time defined as its dependent variable, a remaining voice signal extracting unit for extracting a remaining voice signal on the basis of its remaining voice signal extracting characteristic updated in response to said third and fourth propagation time calculated by said second propagation time calculating unit, and a second suppressed near-end signal outputting unit for outputting a second suppressed near-end signal by subtracting said remaining voice signal extracted by said remaining voice signal extracting unit from either said first near-end signal converted by said first near-end voice converting unit or said second near-end signal converted by said second near-end voice converting unit.

7. A voice communication apparatus as set forth in claim 6, in which
said remaining voice signal extracting unit includes a third near-end signal delay section for delaying said first near-end signal converted by said first near-end voice converting unit on the basis of said third propagation time calculated by said second propagation time calculating unit, a fourth near-end signal delay section for delaying said second near-end signal converted by said second near-end voice converting unit on the basis of said fourth propagation time calculated by said second propagation time calculating unit, and a remaining voice signal outputting section for outputting, as a remaining voice signal, a signal indicative of the signal difference between said first near-end signal delayed by said first near-end signal delay section and said second near-end signal delayed by said second near-end signal delay section, and in which

said second suppressed near-end signal outputting unit includes a disturbing sound signal estimating section for estimating a disturbing sound signal in either said first near-end signal converted by said first near-end voice converting unit or said second near-end signal converted by said second near-end voice converting unit on the basis of said remaining voice signal outputted by said remaining voice signal outputting section, a fifth near-end signal delay section for delaying either said first near-end signal converted by said first near-end voice converting unit or said second near-end signal converted by said second near-end voice converting unit with a delay time required to performing the estimation of said interfering near-end signal by said disturbing sound signal estimating section, a second outputting section for outputting a second suppressed near-end signal by subtracting said disturbing sound signal estimated by said disturbing sound signal estimating section from said near-end signal delayed, as a fifth delayed near-end signal, by said fifth near-end signal delay section, and an updating section for sequentially updating said disturbing sound signal estimating characteristic of said disturbing sound signal estimating section by performing the least squares estimation of said second suppressed near-end signal.

8. A voice communication apparatus as set forth in claim 7, in which
said echo suppressing means further includes an initial characteristic setting unit for setting an initial disturbing sound signal estimating characteristic of said updating section on the basis of said current parameter value detected by said current value detecting unit.

9. A voice communication apparatus as set forth in claim 6 or claim 7, in which
said echo suppressing means includes a first near-end speaker's position detecting unit for detecting, as a first near-end speaker's position, a position of said near-end speaker with respect to either said first near-end voice converting unit or said second near-end voice converting unit on the basis of the cross-correlation function between said first near-end signal converted by said first near-end voice converting unit and said second near-end signal converted by said second near-end voice converting unit, and a second equalizing unit for equalizing a frequency spectrum of said first suppressed near-end signal outputted by said first suppressed near-end signal outputting unit with respect to said current parameter value detected by said current value detecting unit and said position of said near-end speaker detected by said first near-end speaker's position detecting unit.

10. A voice communication apparatus as set forth in claim 6 or claim 7, in which
said echo suppressing means includes a second near-end speaker's position detecting unit for detecting, as a second near-end speaker's position, a position of said near-end speaker with respect to said far-end signal converting unit on the basis of said current parameter value detected by said current value detecting unit, and a third equalizing unit for equalizing a frequency spectrum of said second suppressed near-end signal outputted by said second suppressed near-end signal outputting unit with respect to said current parameter value detected by said current value detecting unit and said second near-end speaker's position detected by said second near-end speaker's position detecting unit.

11. A voice communication apparatus, comprising:

a housing having a reference point;
voice outputting means for outputting a far-end voice indicative of a far-end signal;
voice inputting means for inputting a near-end voice; and
echo suppressing means for suppressing an echo generated by said voice inputting means from said far-end voice outputted by said voice outputting means, wherein
said voice outputting means includes a far-end signal converting unit spaced apart from said reference point with a predetermined first distance, and adapted to convert said far-end signal to said far-end voice,
said voice inputting means includes a first near-end voice converting unit spaced apart from said reference point with a predetermined second distance, and adapted to convert said inputted near-end voice to a first near-end signal, and a second near-end voice converting unit disposed at a predetermined position in spaced relationship with said first near-end voice converting unit, and adapted to convert said inputted near-end voice to a second near-end signal,
said echo suppressing means includes an echo component detecting unit for detecting, as an echo component signal, a component other than a real near-end voice to be specified as a cross-component in each of said first and second near-end signals on the basis of said first and second near-end signals respectively converted by said first and second near-end voice converting units, and a third suppressed near-end signal outputting unit for outputting a third suppressed near-end signal by subtracting said echo component signal detected by said echo component detecting unit from either said first near-end signal converted by said first near-end voice converting unit or said second near-end signal converted by said second near-end voice converting unit.

**12.** A voice communication apparatus as set forth in claim 6, in which
said echo component detecting unit includes a real near-end voice estimating section for estimating, as a real near-end signal, a real near-end voice to be specified as a cross-component in each of said first and second near-end signals respectively converted by said first and second near-end voice converting units, a sixth near-end signal delay section for delaying either said first near-end signal converted by said first near-end voice converting unit or said second near-end signal converted by said second near-end voice converting unit with a delay time required to performing the estimation of said real near-end signal by said real near-end voice estimating section, and an echo component signal outputting section for outputting, as a first echo component signal, a signal indicative of the signal difference between said near-end signal delayed as a sixth delayed near-end signal by said sixth near-end signal delay section and said real near-end signal estimated by said real near-end voice estimating section, and in which said third suppressed near-end signal outputting unit includes an echo component estimating section for estimating, as a second echo component signal, a signal to be specified as a component other than said real near-end voice in either said first near-end signal converted by said first near-end voice converting unit or said second near-end signal converted by said second near-end voice converting unit on the basis of said echo component signal outputted by said echo component signal outputting section, a seventh near-end signal delay section for delaying either said first near-end signal converted by said first near-end voice converting unit or said second near-end signal converted by said second near-end voice converting unit with a delay time required to performing the estimation of said echo component signal by said echo component estimating section, and a third outputting section for outputting a third suppressed near-end signal by subtracting said second echo component signal estimated by said echo component estimating section from said near-end signal delayed as a seventh delayed near-end signal by said seventh near-end signal delay section.

**13.** A voice communication apparatus as set forth in claim 6, in which
said real near-end voice estimating section has a first adaptive filter for executing the adaptive signal processing to perform the least absolute deviation estimation of a signal outputted by said echo component signal outputting section to either said first near-end signal converted by said first near-end voice converting unit or said second near-end signal converted by said second near-end voice converting unit, in which
said echo component estimating section has a second adaptive filter for executing the adaptive signal processing to perform the least absolute deviation estimation of a signal outputted by said third outputting section to said echo component signal outputted by said echo component signal outputting section, and in which
said echo suppressing means includes a current value detecting unit for detecting a current parameter value indicative of a current relative location of either said first near-end voice converting unit or said second near-end voice converting unit with respect to said far-end signal converting unit, a first initial value determining unit for determining, as a parameter of said adaptive signal processing, initial filter coefficients of said first adaptive filter in response to said current parameter value detected by said current value detecting unit, and a second initial value determining unit for determining, as a parameter of said adaptive signal processing, initial filter coefficients of said second adaptive filter in response to said current parameter value detected by said current value detecting unit.

**14.** A voice communication apparatus as set forth in claim 13, in which
said echo suppressing means includes an adaptive controlling unit for issuing an instruction to said first adaptive filter to update said first filter coefficients when the judgment is made that the near-end signal predetermined as one of said first and second near-end signals exceeds in amplitude said far-end signal, and issuing an instruction to said second adaptive filter to update said second filter coefficients when the judgment is made that said far-end signal exceeds in amplitude one of said first and second near-end signals.

# FIG. 1

EP 1 655 856 A1

VOICE OUTPUTTING MEANS

ECHO SUPPRESSING MEANS

| CURRENT VALUE DETECTING UNIT | ~131 |

| FIRST PROPAGATION TIME CALCULATING UNIT |

| FIRST NEAR-END SIGNAL DELAY SECTION |

| SECOND NEAR-END SIGNAL DELAY SECTION |

VOICE INPUTTING MEANS

FIG. 2

VOICE OUTPUTTING MEANS

211

212

ECHO SUPPRESSING MEANS

131 CURRENT VALUE DETECTING UNIT

235

231 MEMORY UNIT

232 CPU

233 A/D CONVERTER

234 D/A CONVERTER

11

13

12

221

222

223

224

VOICE INPUTTING MEANS

# FIG. 3

DIRECTION OF
NEAR-END SPEAKER

EP 1 655 856 A1

# FIG. 4

START

S401
ENDING CONDITION ?

YES → END

NO

S402
START OF
VOICE COMMUNICATION? → NO

YES

S403 — DETECTION OF CURRENT VALUE

S404 — CALCULATE PROPAGATION TIME

S405 — RECEIVE NEAR-END SIGNAL

S406 — DELAY NEAR-END SIGNAL

S407 — SUPPRESS ECHO COMPONENT

S408 — OUTPUT NEAR-END SIGNAL

S409
END OF
VOICE COMMUNICATION? → NO

YES

FIG. 5

VOICE OUTPUTTING MEANS

ECHO SUPPRESSING MEANS

CURRENT VALUE DETECTING UNIT —131

FIRST PROPAGATION TIME CALCULATING UNIT

FIRST NEAR-END SIGNAL DELAY SECTION

SECOND NEAR-END SIGNAL DELAY SECTION

FIRST EQUALIZING UNIT

VOICE INPUTTING MEANS

EP 1 655 856 A1

# FIG. 6

```
                    ( START )
                        │
                        ▼
        YES      ◇ ENDING CONDITION ?  ◇  S401
      ┌──────────
      ▼              NO
   ( END )            │
                      ▼
              ◇  START OF          ◇  S402      NO
              ◇ VOICE COMMUNICATION? ◇ ──────────────┐
                      │                              │
                     YES                             │
                      ▼                              │
S403 ─┤ DETECTION OF CURRENT VALUE │                 │
                      │                              │
                      ▼                              │
S404 ─┤ CALCULATE PROPAGATION TIME │                 │
                      │                              │
                      ▼                              │
S405 ─┤   RECEIVE NEAR-END SIGNAL  │                 │
                      │                              │
                      ▼                              │
S406 ─┤    DELAY NEAR-END SIGNAL   │                 │
                      │                              │
                      ▼                              │
S407 ─┤  SUPPRESS ECHO COMPONENT   │                 │
                      │                              │
                      ▼                              │
S410 ─┤     FIRST EQUALIZATION     │                 │
                      │                              │
                      ▼                              │
S408 ─┤   OUTPUT NEAR-END SIGNAL   │                 │
                      │                              │
                      ▼                              │
              ◇   END OF           ◇  S409    NO      │
              ◇ VOICE COMMUNICATION? ◇ ───────        │
                      │                              │
                     YES ───────────────────────────┘
```

# FIG. 7

START

S411 — CALCULATE EQUALIZING CHARACTERISTIC

S412 — EQUALIZE FREQUENCY SPECTRUM

END

# FIG. 8

## FIG. 9

# FIG. 10

```
                    ┌─────────┐
                    │  START  │
                    └────┬────┘
                         │                         ┌─── S401
      YES          ╱─────▼──────────╲
    ┌─────────────◁  ENDING CONDITION ? ▷
    │              ╲────────┬─────────╱
    ▼                       │ NO
 ┌─────┐                    │                      ┌─── S402
 │ END │          ╱─────────▼──────────╲      NO
 └─────┘        ◁    START OF            ▷──────────►
                ╲  VOICE COMMUNICATION? ╱
                 ╲─────────┬──────────╱
                           │ YES
          ┌────────────────▼────────────────┐
   S403 ──│   DETECTION OF CURRENT VALUE     │
          └────────────────┬────────────────┘
          ┌────────────────▼────────────────┐
   S404 ──│   CALCULATE PROPAGATION TIME     │
          └────────────────┬────────────────┘
          ┌────────────────▼────────────────┐
   S405 ──│     RECEIVE NEAR-END SIGNAL      │
          └────────────────┬────────────────┘
          ┌────────────────▼────────────────┐
   S406 ──│      DELAY NEAR-END SIGNAL       │
          └────────────────┬────────────────┘
          ┌────────────────▼────────────────┐
   S407 ──│    SUPPRESS ECHO COMPONENT       │
          └────────────────┬────────────────┘
          ┌────────────────▼────────────────┐
   S420 ──│      SECOND EQUALIZATION         │
          └────────────────┬────────────────┘
          ┌────────────────▼────────────────┐
   S408 ──│     OUTPUT NEAR-END SIGNAL       │
          └────────────────┬────────────────┘
                           │                      ┌─── S409
                 ╱─────────▼──────────╲      NO
                ◁     END OF            ▷──────────►
                ╲  VOICE COMMUNICATION? ╱
                 ╲─────────┬──────────╱
                           │ YES
```

# FIG. 11

START

421 CALCULATE NEAR-END SPEAKER'S POSITION

S422 CALCULATE EQUALIZING CHARACTERISTIC

S423 EQUALIZE FREQUENCY SPECTRUM

END

# FIG. 12

DIRECTION OF
NEAR-END SPEAKER

VOICE OUTPUTTING MEANS

112

11

13

12

α

ECHO SUPPRESSING MEANS

122   121

CURRENT VALUE
DETECTING UNIT

131

132   FIRST PROPAGATION TIME
CALCULATING UNIT

130

140

FIRST NEAR-END
SIGNAL DELAY
SECTION

133

THIRD
EQUALIZING UNIT

SECOND NEAR-END
SIGNAL DELAY
SECTION

134

135

VOICE
INPUTTING
MEANS

SECOND NEAR-END
SPEAKER'S POSITION
DETECTING UNIT

139

EP 1 655 856 A1

# FIG. 13

(a)

$\theta = 0°$

(b)

$\theta = 30°$

(c)

$\theta = 60°$

# FIG. 14

VOICE OUTPUTTING MEANS

112

11

ECHO SUPPRESSING MEANS

12  122  121  13

CURRENT VALUE
DETECTING UNIT — 131

141 — SECOND PROPAGATION
TIME CALCULATING UNIT

150

146  151

FIFTH NEAR-END
SIGNAL DELAY
SECTION

THIRD NEAR-END
SIGNAL DELAY
SECTION

142

DISTURBING SOUND
SIGNAL ESTIMATING
SECTION

145

144

147

FOURTH NEAR-END
SIGNAL DELAY
SECTION

143

UPDATING SECTION

148

VOICE INPUTTING
MEANS

EP 1 655 856 A1

# FIG. 15

START

S401
ENDING CONDITION ?
YES →
END
NO ↓

S402
START OF
VOICE COMMUNICATION?
NO →

YES ↓

S403 — DETECTION OF CURRENT VALUE

S430 — CALCULATE SECOND PROPAGATION TIME

S405 — RECEIVE NEAR-END SIGNAL

S440 — SUPPRESS ECHO COMPONENT
AND BACKGROUND NOISE

S408 — OUTPUT NEAR-END SIGNAL

S409
END OF
VOICE COMMUNICATION?
NO

YES

# FIG. 16

START

S441 — DELAY THIRD AND FOURTH NEAR-END SIGNALS

S442 — CALCULATE REMAINING VOICE COMPONENT

S443 — ESTIMATE DISTURBING SOUND SIGNAL

S444 — DELAY FIFTH NEAR-END SIGNAL

S445 — OUTPUT SUPPRESSED NEAR-END SIGNAL

S446 — UPDATE DELAY TIME COMPENSATION CHARACTERISTIC

END

**FIG. 17**

VOICE OUTPUTTING MEANS

11

112

12  122  121  13

131

ECHO SUPPRESSING MEANS

CURRENT VALUE DETECTING UNIT

INITIAL CHARACTERISTIC SETTING UNIT — 149

141 — SECOND PROPAGATION TIME CALCULATING UNIT

150

146  151

FIFTH NEAR-END SIGNAL DELAY SECTION

142 — THIRD NEAR-END SIGNAL DELAY SECTION

145 — DISTURBING SOUND SIGNAL ESTIMATING SECTION

144

143 — FOURTH NEAR-END SIGNAL DELAY SECTION

147

148 — UPDATING SECTION

VOICE INPUTTING MEANS

EP 1 655 856 A1

# FIG. 18

START

S401 ENDING CONDITION ?

YES → END

NO

S402 START OF VOICE COMMUNICATION? → NO

YES

S403 DETECTION OF CURRENT VALUE

S430 CALCULATE SECOND PROPAGATION TIME

S431 SET INITIAL DELAY TIME COMPENSATION CHARACTERISTIC

S405 RECEIVE NEAR-END SIGNAL

S440 SUPPRESS ECHO COMPONENT AND BACKGROUND NOISE

S408 OUTPUT NEAR-END SIGNAL

S409 END OF VOICE COMMUNICATION? → NO

YES

# FIG. 19

VOICE OUTPUTTING MEANS

ECHO SUPPRESSING MEANS

CURRENT VALUE DETECTING UNIT — 131

SECOND EQUALIZING UNIT — 138

141 — SECOND PROPAGATION TIME CALCULATING UNIT

FIFTH NEAR-END SIGNAL DELAY SECTION — 146

THIRD NEAR-END SIGNAL DELAY SECTION

DISTURBING SOUND SIGNAL ESTIMATING SECTION — 145

143 142

FOURTH NEAR-END SIGNAL DELAY SECTION

UPDATING SECTION — 148

144

150

147

151

VOICE INPUTTING MEANS

FIRST NEAR-END SPEAKER'S POSITION DETECTING UNIT — 137

EP 1 655 856 A1

# FIG. 20

```
                        ┌─────────┐
                        │  START  │
                        └─────────┘
                             │
                             ▼
       YES          ◇ ENDING CONDITION ? ◇        S401
       ┌──────────
       ▼          │ NO
    ┌─────┐       ▼
    │ END │   ◇ START OF              ◇  S402   NO
    └─────┘   ◇ VOICE COMMUNICATION? ◇ ──────────►
                   │ YES
                   ▼
  S403 ─┤ DETECTION OF CURRENT VALUE │
                   │
                   ▼
  S430 ─┤ CALCULATE SECOND PROPAGATION TIME │
                   │
                   ▼
  S405 ─┤ RECEIVE NEAR-END SIGNAL │
                   │
                   ▼
  S440 ─┤ SUPPRESS ECHO COMPONENT │
        │ AND BACKGROUND NOISE    │
                   │
                   ▼
  S420 ─┤ SECOND EQUALIZATION │
                   │
                   ▼
  S408 ─┤ OUTPUT NEAR-END SIGNAL │
                   │
                   ▼
            ◇ END OF              ◇  S409  NO
            ◇ VOICE COMMUNICATION? ◇
                   │ YES
```

FIG. 21

VOICE OUTPUTTING MEANS

ECHO SUPPRESSING MEANS

VOICE INPUTTING MEANS

DIRECTION OF NEAR-END SPEAKER

11

13

12

α

112

THIRD EQUALIZING UNIT

131

140

CURRENT VALUE DETECTING UNIT

141

SECOND PROPAGATION TIME CALCULATING UNIT

FIFTH NEAR-END SIGNAL DELAY SECTION

146

DISTURBING SOUND SIGNAL ESTIMATING SECTION

145

147

151

UPDATING SECTION

148

SECOND NEAR-END SPEAKER'S POSITION DETECTING UNIT

139

THIRD NEAR-END SIGNAL DELAY SECTION

143

FOURTH NEAR-END SIGNAL DELAY SECTION

142

144

150

121

122

FIG. 22

VOICE OUTPUTTING MEANS

ECHO SUPPRESSING MEANS

CURRENT VALUE DETECTING UNIT

SECOND INITIAL VALUE DETERMINING UNIT

FIRST INITIAL VALUE DETERMINING UNIT

SEVENTH NEAR-END SIGNAL DELAY SECTION

SIXTH NEAR-END SIGNAL DELAY SECTION

SECOND ADAPTIVE FILTER

FIRST ADAPTIVE FILTER

SECOND COEFFICIENT STORING SECTION

FIRST COEFFICIENT STORING SECTION

ADAPTIVE CONTROLLING UNIT

VOICE INPUTTING MEANS

EP 1 655 856 A1

**FIG. 23**

START

S501 — ENDING CONDITION ?

YES → END

NO ↓

S502 — START OF VOICE COMMUNICATION? — NO →

YES ↓

S503 — DETECTION OF CURRENT VALUE

S504 — DETERMINATION OF INITIAL VALUE

S505 — OBTAIN INPUT SIGNAL FROM MICROPHONE

S506 — FILTERING

S507 — SUBTRACTION

S508 — FILTERING

S509 — SUBTRACTION

S510 — OUTPUT NEAR-END SIGNAL

S511 — UPDATE FILTER COEFFICIENT

S512 — END OF VOICE COMMUNICATION? — NO →

YES ↓

S513 — ACCUMULATION OF FILTER COEFFICIENT

# FIG. 24

(a) NON-DISTORTED SIGNAL OUTPUTTED
WITH NO ECHO SUPPRESSION

(d) DISTORTED SIGNAL OUTPUTTED
WITH NO ECHO SUPPRESSION

(b) NON-DISTORTED SIGNAL OUTPUTTED
BY CONVENTIONAL APPARATUS

(e) DISTORTED SIGNAL OUTPUTTED
BY CONVENTIONAL APPARATUS

(c) NON-DISTORTED SIGNAL OUTPUTTED
BY PRESENT APPARATUS

(f) DISTORTED SIGNAL OUTPUTTED
BY PRESENT APPARATUS

# FIG. 25

VOICE SIGNAL SWITCHING UNIT

51

53

ECHO CANCELLER

52

ECHO CANCELLER

54

55

58

EP 1 655 856 A1

## FIG. 26

VOICE SIGNAL
SWITCHING
UNIT

54

57

ECHO CANCELLER

55

58

56

EP 1 655 856 A1

## INTERNATIONAL SEARCH REPORT

| | International application No. |
|---|---|
| | PCT/JP2004/009697 |

**A. CLASSIFICATION OF SUBJECT MATTER**
Int.Cl⁷ H04B3/23, H04M1/58

According to International Patent Classification (IPC) or to both national classification and IPC

**B. FIELDS SEARCHED**

Minimum documentation searched (classification system followed by classification symbols)
Int.Cl⁷ H04B3/20, H04M1/58

Documentation searched other than minimum documentation to the extent that such documents are included in the fields searched

| Jitsuyo Shinan Koho | 1922–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2002-204187 A (Fujitsu Ltd.), 19 July, 2002 (19.07.02), Particularly, Fig. 11; Par. No. [0103] & US 2002/0075818 A1 | 1-5 |
| Y | JP 08-009005 A (NEC Corp.), 12 January, 1996 (12.01.96), Particularly, Figs. 2 to 4; Par. Nos. [0052], [0069] & EP 689332 A2    & US 5608793 A | 1-6,9-11 |
| Y | JP 2003-125070 A (Fujitsu Ltd.), 25 April, 2003 (25.04.03), Particularly, Fig. 3; Par. No. [0033] (Family: none) | 1-6,9-11 |

[X] Further documents are listed in the continuation of Box C.      [ ] See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 October, 2004 (05.10.04) | 19 October, 2004 (19.10.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

| International application No. |
| --- |
| PCT/JP2004/009697 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2003-198715 A (Kenwood Corp.), 11 July, 2003 (11.07.03), Particularly, Par. Nos. [0007], [0008], [0020] to [0029] ((Family: none) | 3-5 |
| Y | Kasho RYU, Masato ABE, Ken'ichi KIDO, "Futatsu no Microphone Shutsuryokukan no Cross Spectrum ni yoru Ongen Ichi Suiteiho ni okeru Ido Zatsuongen no Eikyo", Nihon Onkyo Gakkaishi, Vol.46, No.7, 01 July, 1990 (01.07.90), pages 523 to 530 | 4,5,9,10 |
| Y | JP 06-152724 A (Sony Corp.), 31 May, 1994 (31.05.94), Particularly, Par. Nos. [0013] to [0015], [0020]; Figs. 1, 5 (Family: none) | 6,9-11 |
| A | JP 2001-154688 A (Toyota Central Research And Development Laboratories, Inc.), 08 June, 2001 (08.06.01), Particularly, Par. Nos. [0018], [0019]; Fig. 4 (Family: none) | 6,9-11 |
| A | JP 2000-209689 A (Canon Inc.), 28 July, 2000 (28.07.00), Particularly, Par. No. [0029]; Fig. 2 (Family: none) | 6,9-11 |
| A | JP 2003-060530 A (Fujitsu Ltd.), 28 February, 2003 (28.02.03), Particularly, Fig. 4; Par. Nos. [0073] to [0087] & US 2003/0039353 A1 | 7,8 |

Form PCT/ISA/210 (continuation of second sheet) (January 2004)